# EUROPEAN PATENT SPECIFICATION

(11) **EP 2 477 703 B1**
(45) Date of publication and mention of the grant of the patent: **29.08.2018**
(21) Application number: 10816290.0
(22) Date of filing: 14.09.2010
(51) Int. Cl.: A63B 5/11, F16B 5/06, A63B 21/055, F16B 45/00

(54) **REBOUNDING APPARATUS WITH TENSIONED ELASTIC CORDS**
RÜCKSCHLAGVORRICHTUNG MIT GESPANNTEN ELASTISCHEN SEILEN
APPAREIL DE REBONDISSEMENT AVEC CORDONS ÉLASTIQUES TENDUS

(30) Priority: 14.09.2009 US 881105; 29.09.2009 US 881486; 07.04.2010 US 321571 P
(43) Date of publication of application: 25.07.2012
(73) Proprietor: Publicover, Mark W., Saratoga, CA 95070 (US)
(72) Inventor: HYLBERT, Jon, P., Los Gatos California 95030 (US); STRASSER, Donald, Trumbull Connecticut 06611 (US)
(74) Representative: Witte, Weller & Partner Patentanwälte mbB
(86) International application number: PCT/US2010/048820
(87) International publication number: WO 2011/032173

(56) References cited:
- CN-Y- 200 995 024
- DE-A1- 2 504 875
- DE-B3-102006 028 363
- JP-U- S63 146 666
- KR-A- 20080 066 183
- KR-Y1- 200 418 020
- US-A- 2 916 746
- US-A- 5 033 169
- US-A- 5 967 943
- US-A- 6 129 649
- US-B1- 7 494 445

## Description

The present invention relates to trampoline-type devices for physical exercise. Such devices commonly referred to as "rebounders," typically are circular and have a relatively small diameter of about 40 inches with a surface area available for jumping of about 615 square inches or less. Examples of such device are shown in U.S. Patent No. 7,094,181 (to Hall, Aug. 22, 2006) and US Patent No.4,331,329 (to Mirkovich et al., May 25, 1982).

In a typical prior art trampoline and rebounder configuration, the mat is tensioned by elastic or spring elements generally arranged radially between the mat outer diameter and the inner diameter of the frame. This area is sometimes covered by a static pad which is attached to the frame, and prevents the user from stepping directly onto the elastic elements or springs. However, this design has several disadvantages. Firstly, the nature of the static pad makes it a poor surface for rebounding, since being attached to the frame it has limited freedom of movement. Secondly, the static pad is clearly seen by the user as not useful as a rebounding surface, and leads to the impression of a jumping surface which has a relatively small diameter as compared to the total diameter of the frame.

DE 25 04 875 A1 discloses a trampoline with adjustable spring force of the jumping mat for adaptation to the body weight of the jumper and tensing up the jumping mat. The trampoline has a single endless rubber cord connected alternately about the frame of the trampoline and about one of the plurality of fixing points distributed along the periphery of the jumping mat.

US 6 129 649 discloses a trampoline having a plurality of folded elastic straps, each with opposite hooking ends secured to a peripheral portion of the bed member and an intermediate section confining a passage for extension of the looped frame portion therethrough.

DE 10 2006 028 363 B3 discloses a trampoline having a frame and a jumping mat having hook elements, wherein the jumping mat is connected with the frame via a plurality of ring shaped endless cord sections at least partially wound around the frame and hung into the hook elements.

CN 200 995 025 Y and US 2,916,746 disclose further trampolines.

It is therefore a first object of the present invention to overcome the above disadvantages by providing a new and improved exercise trampoline or rebounder in which the useable area of the trampoline is increased.

It is another object to provide such an improved trampoline which is easy to assemble.

It is a further object of the invention to provide such an increased usable area without other detriment to the user's comfort, or the trampoline performance, yet at the same time due so in a manner also not detrimental to the life of the product by increasing wear on components.

According to the invention, a rebounding surface for a trampoline or a rebounder according to claim 1 is provided. Further, according to the invention, a method of extending the life of elastic cords used in a trampoline according to claim 15 is provided. Further aspects of the invention are provided in the dependent claims.

The above and other objects, effects, features, and advantages of the present invention will become more apparent from the following description of the embodiments thereof taken in conjunction with the accompanying drawings.

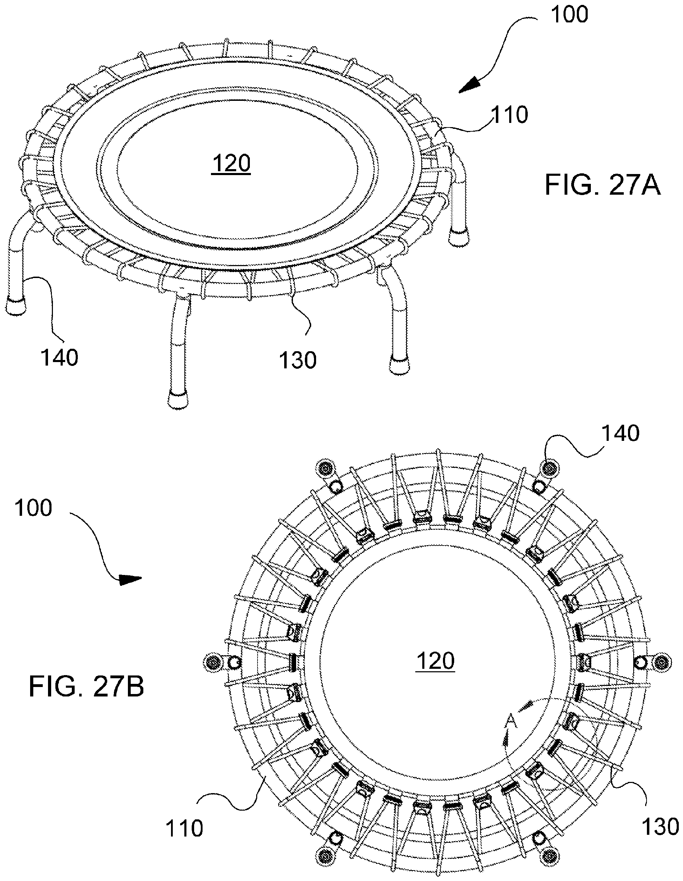

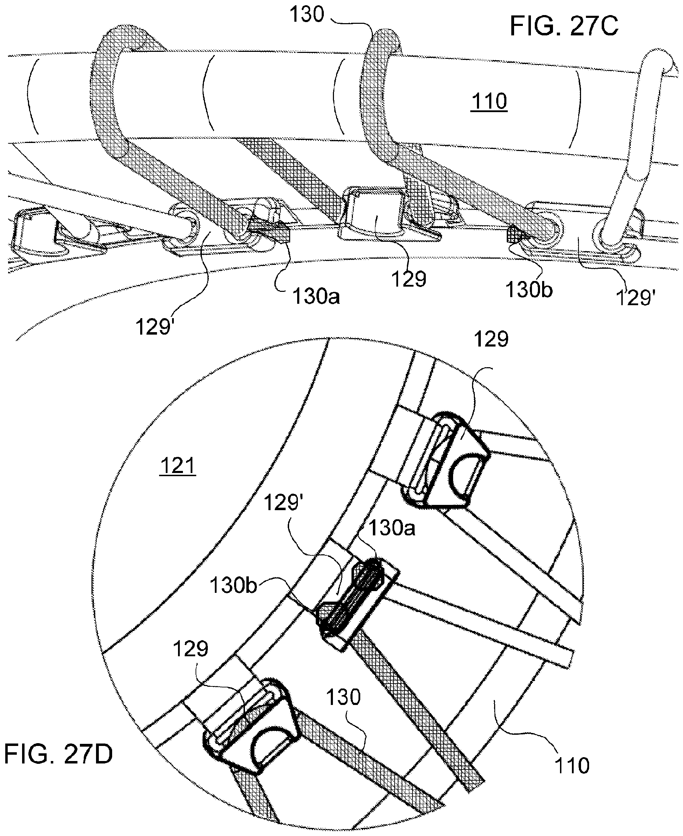

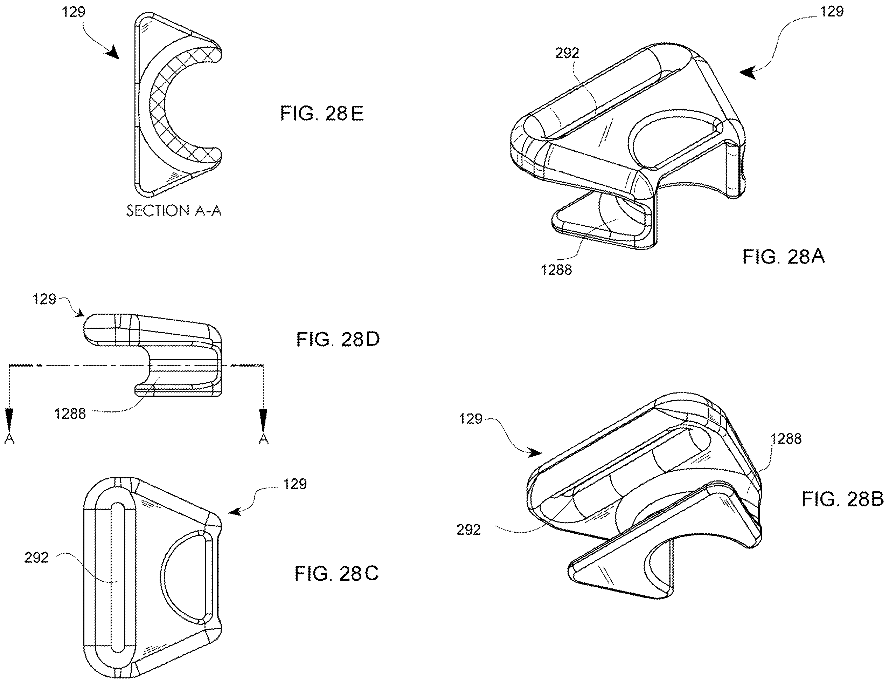

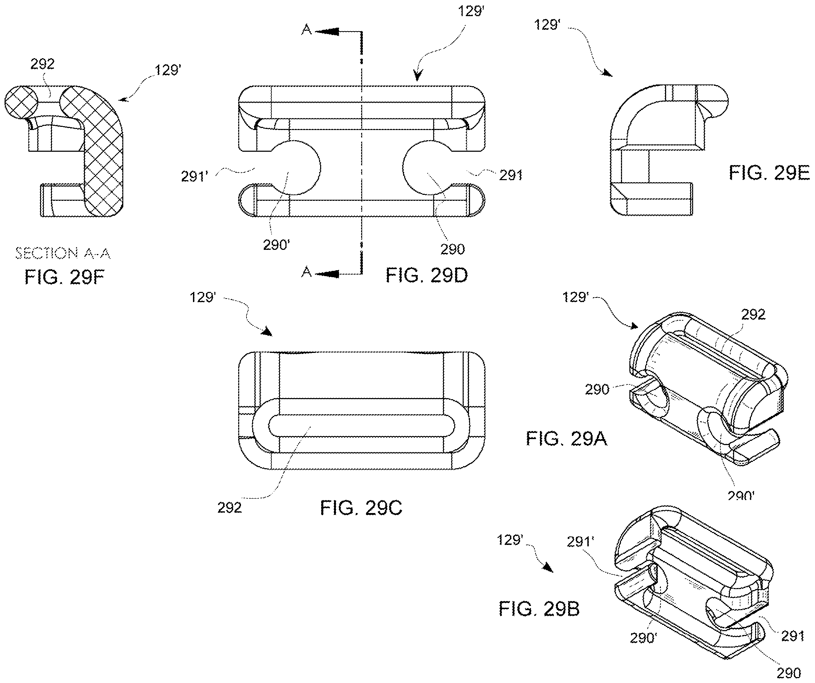

The accompanying drawings, incorporated in and forming a part of the specification, illustrate several trampoline and rebounder arrangements. Some, although not all, embodiments of the invention are described in the following description. In the drawings:
FIG. 1 is a perspective view of an exemplary trampoline.
FIG. 2 is a plan view from above the trampoline shown in FIG 1.
FIG. 3 is partial plan view from above an exemplary trampoline.
FIG. 4A is partial radial cross-sectional elevation of the portion of a trampoline at section line A-A in FIG. 2 or 3 when the trampoline in an equilibrium or resting state.
FIG. 4B is cross-sectional elevation of the portion shown in FIG. 4A immediately after impact by the user.
FIG. 4C is cross-sectional elevation of the portion shown in FIG. 4B on return to equilibrium.
FIG. 5 is a plan view from above of an exemplary trampoline showing the rebounding surface or mat.
FIG. 6A is partial radial cross-sectional elevation of the portion of a trampoline at section line A-A in FIG. 2 or 3 of an exemplary trampoline in an equilibrium or resting state.
FIG. 6B is partial tangential cross-sectional elevation of the surrounding portion of the mat at section line B-B in FIG. 6C of an exemplary trampoline.
FIG. 6C is plan view of the portion of the mat shown in FIG. 6B.
FIG. 7A is a plan view from above the embodiment of the trampoline shown in FIG. 6B and 6C.
FIG. 7B is an exploded portion of FIG. 7A.
FIG. 8A is partial radial cross-sectional elevation at section line A-A in FIG. 2 or 3 of a portion of an exemplary trampoline in an equilibrium or resting state.
FIG. 8B is partial tangential cross-sectional elevation of the surrounding portion of the mat at section line B-B in FIG. 9A in an exemplary trampoline.
FIG. 9A is a plan view from above the trampoline shown in FIG. 8B.
FIG. 9B is an exploded portion of FIG. 9A.
FIG. 10A is a partial radial cross-sectional elevation at section line A-A in FIG. 2 or 3 of a portion of an exemplary trampoline in an equilibrium or resting state.
FIG. 10B is a partial radial cross-sectional elevation at section line A-A in FIG. 2 or 3 of a portion of an exemplary trampoline in an equilibrium or resting state showing another example for attaching a gripping member to the elastic cord.
FIG. 11A is a cross-sectional elevation at section line A-A in FIG. 11B of a portion of the underside of a trampoline showing an example for attaching a gripping member to the elastic cord.
FIG. 11B is a plan view from below the trampoline showing a portion thereof deploying several of the gripping members of FIG. 11A.
FIG. 11C is a partial radial cross-sectional elevation at section line B-B in FIG. 11B of a portion of the example shown in FIG. 11A and 11B.
FIG. 11D is a perspective view of the gripping member of FIG. 11A-C.
FIG. 12A is a perspective view from the front corner of an embodiment of a coupler.
FIG. 12B is a perspective view from the back corner of the coupler of FIG. 12A.
FIG. 12C is another perspective view from the side of the coupler of FIG. 12A and 12B including the attached elastic cord.
FIG. 13A is a perspective view from the back corner of another alternative embodiment of the coupler.
FIG. 13B is a perspective view from the front corner of the coupler of FIG. 13A.
FIG. 13C is another perspective view of the coupler of FIG. 13A and 13B that also illustrates the tensioned elastic cord.
FIG. 14A-D are perspective views of other alternative embodiment of the coupler.
FIG. 15A is a perspective views of another alternative embodiment of the coupler. FIG. 15B is a cross sectional elevation of the embodiment of the coupler of FIG. 15A. FIG. 15C is a plan view of the underside of the trampoline showing the embodiment of FIG. 15A and B.
FIG. 16A is a front perspective views of another alternative embodiment of the coupler whereas FIG. 16B is a rear is a perspective views of the embodiment of the coupler er in FIG. 16A
FIG. 17A, 17B and 17C are top plan, front elevation and side elevation views respectively of the coupler in FIG. 16A and 16B.
FIG. 18A is a rear elevation view of the embodiment of the coupler in FIG. 16 and 17, whereas FIG. 18B is a side elevation view thereof.
FIG. 19A is a front perspective views of another alternative embodiment of the coupler whereas FIG. 19B is a rear is a perspective views thereof.
FIG. 20 is a side elevation of the embodiment of the coupler in FIG. 19A and 19B.
FIG. 21A is a front elevation of the coupler of FIG. 19-20 whereas FIG. 21C is a rear elevation view thereof. FIG. 21B is a top plan view thereof. FIG. 21D is a cross-sectional plan view at section line A-A in FIG. 21C.
FIG. 21E is a cross-sectional plan view of a portion of the trampoline apparatus at section line A-A in FIG. 21C showing the location of the elastic cord when the coupler of FIG. 18-21 is deployed.
FIG. 22 is a corner perspective views of an example of a gripping member used in combination with a one of or more elastic cords as described above with respect to FIG. 3.
FIG. 23A-D are elevation and plan views of the example of the gripping member in FIG. 22 in which FIG. 23A is a bottom plan view, FIG. 23B is a front elevation, FIG. 23C is a top plan view and FIG. 23D is side elevation thereof.
FIG. 24A-C illustrate in a plan view the attachment of the gripping member of FIG. 22 and 23 to the rebounding mat, in which FIG. 24A is a plan view of the rebounding mat having holes cut in the perimeter region for receiving the connector of FIG. 22 and 23. FIG. 24B is a plan view of the rebounding mat with the connector of FIG. 22 and 23 disposed adjacent to the holes prior to completing an attaching seam in the rebounding mat, whereas FIG. 24C is the same region after the seam is completed to secure the coupling members in place.
FIG. 25A is a cross-sectional elevation corresponding to section line A-A in FIG. 24C.
FIG. 25B is a plan cross-sectional view corresponding to section line B-B in FIG. 25A.
FIG. 26A is a cross-sectional elevation of a first embodiment of a frame adapted to adjusting the tension on a cord like elastic member in another example useful for understanding the invention, whereas FIG. 26B is an exterior elevation of the frame portion in FIG. 26A, with FIG. 26C being a cross-sectional elevation of an alternative example of that shown in FIG. 26A.
FIG.27A is a perspective view of another example useful for understanding the invention, whereas FIG. 27B is an underside plan view thereof. FIG. 27C is an enlarged perspective view of a portion of the underside, whereas FIG. 27D is an enlarged plan view of the detailed portion "A" in Fig. 27B.
FIG.'s 28A-E illustrate in various views a first connector shown in FIG. 27, in which FIG. 28A as a front perspective view thereof, FIG. 28B is a rear perspective view thereof, FIG. 28C is a top plan view thereof, FIG. 28D is a side elevation view thereof, and FIG. 28E is cross-section plan view at section line A-A in FIG. 28D.
FIG.'s 29A-F illustrate in various views a second connector shown in FIG. 27, in which FIG. 29A as a front perspective view thereof, FIG. 29B is a rear perspective view thereof, FIG. 29C is a top plan view thereof, FIG. 29D is a rear elevation thereof, FIG. 29E is a side elevation thereof and FIG. is a cross-sectional elevation thereof at section line A-A in Fig. 29D.

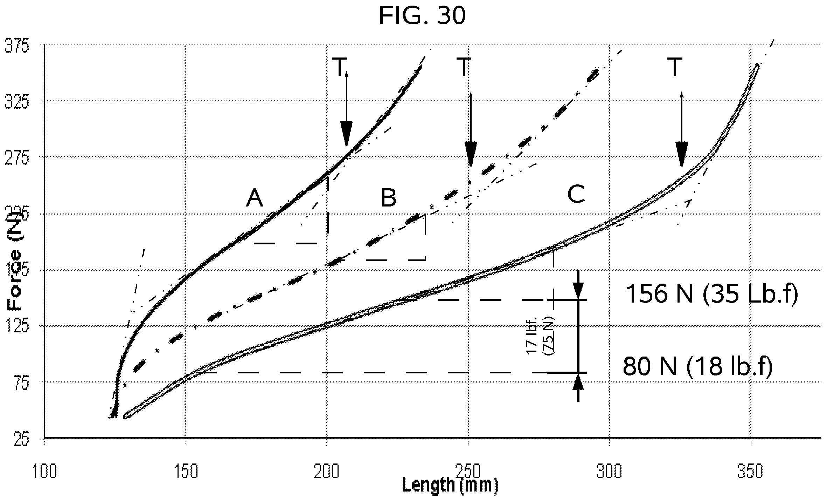

FIG. 30 is the stress-strain curves of different fabric covered elastic cords.

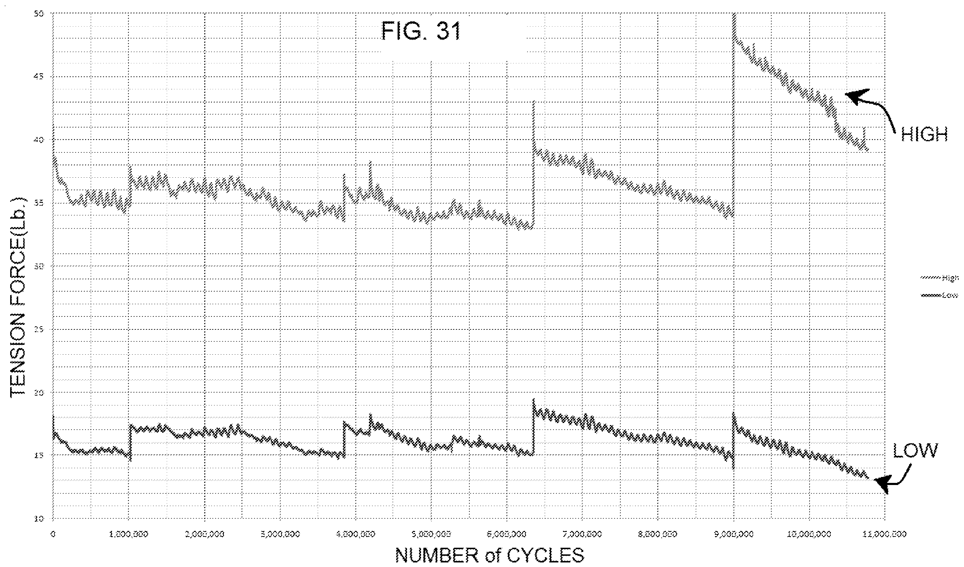

FIG. 31 is the cyclic stress level recorded when an elastic covered fabric cord is repeated cycled with repeated re-tensioning.

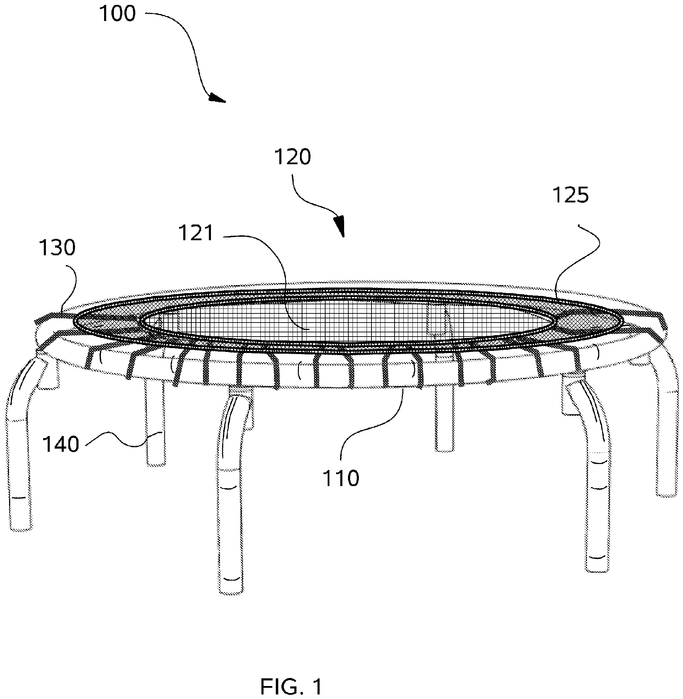

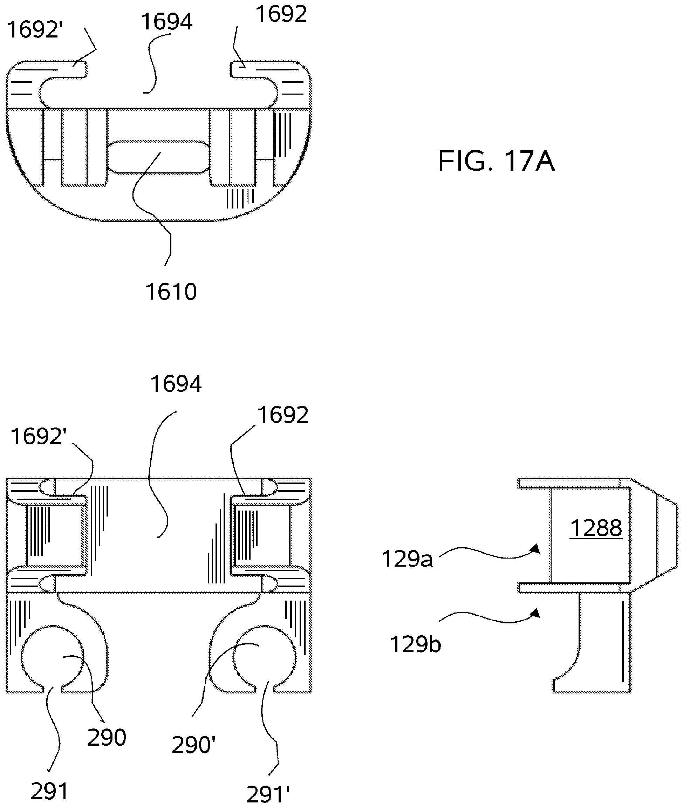

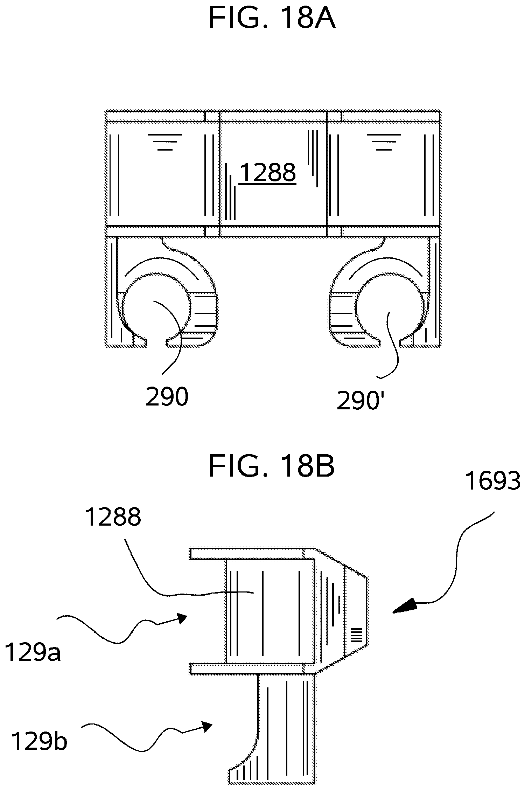

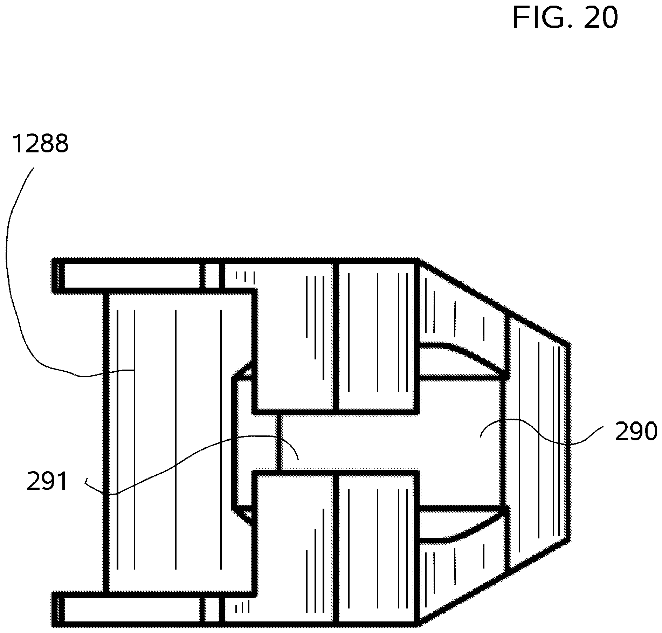

Referring to FIGS. 1 through 31, wherein like reference numerals refer to like components in the various views, there is illustrated therein a new and improved Trampoline with expanded rebounding surface generally denominated 100 herein.

In accordance with the present invention trampoline 100 in FIG. 1 -3 has a closed frame 110, a rebounding mat 120 with a central portion 121 having grip members 123 and a surrounding outer portion 125 to cover the grip members. Generally, such a trampoline 100 will also have legs 140 descending downward from the frame 110 for supporting the trampoline above the ground. The shape of frame 110 and rebounding mat 120 are usually roughly the same and can be circular, elliptical, rectangular, hexagonal and the like.

Elastic members 130 connect the grip members 123 to the closed frame 110 and are at least partially covered by the surrounding outer portion 125. The surrounding outer portion 125 is not attached to or constrained by the closed frame 110. Prior art trampolines connect some portion of an annular or peripheral member that cover the springs (or a similar tensioning device that support the rebounding mat) to the frame, even when this peripheral member or cover is attached to the rebounding mat.

In one aspect the trampoline 100 preferably deploys cordlike flexible elastic members 130 which are substantially covered by the surrounding outer portion 125 to effectively expand the area of the rebounding surface beyond the rebounding mat 120 center 121. While the outer portion 125 can be used to expand the rebound surface of a trampoline that deploys metal springs as the elastic member 130, in the preferred examples described more fully below, the elastic members 130 are soft and deploy rubber or synthetic elastomeric resins and the like. In more preferable embodiments, the elastic members that tension the mat 120 are cordlike flexible elastic members, such as "Bungee" cords, and similar elastic cords such as those
described in US Pat. No. 1,050,442 9 (to Friswell, Jan 14, 1913); 3,130,630 (to Dawes, Oct. 2,1964); 4,513,063 (to Hashi et al., April 23,1985) and 5,607,736 (to Williams, Mar. 4, 1997). Such cord like elastic members generally compose of more continuous strand or tubes of rubber or an elastomer, covered or otherwise integrated to include one or more layers of woven fabric. Alternatively, the elastic member need not always deploy exterior surrounding fabric sheath as elastic material can be co-woven into a fabric members. In addition, an elastic member 130 can have a relatively non-elastic cord of cable that is attached to one or more shorter elastic members. The cross-section of the elastic member 130, while preferably round, can also be oval or rectangular and the like.

It has been discovered that the service life and utility of fabric containing cord like elastic members can be greatly extended by a process of re-tensioning, provided they are not initially strained to what has been discovered to be an excessive level. As re-tensioning involves extending the cord like elastic members beyond the length that provided an initial level of tension, aspects of the invention include particular methods and apparatus for conveniently extending the length beyond the initial length so as to achieve a level of tension comparable to level of tension at the first or initial extended length.

In more preferred embodiments, the closed frame 110 is circular, and the outer surrounding portion 125 of the rebounding mat 120 has an annular shape and extends above the grip members 123 at the edge of the circular central region.

One or more elastic cords 130 can connect the frame 110 to the rebounding mat 120 in various configurations that are compatible with the various embodiments for the outer surrounding portion or peripheral region 125. Hence, every such combination need not be explicitly described to be appreciated by one of ordinary skill in the art in light of this disclosure. Further, although the invention provides significant benefits to smaller rebounder style trampolines, no intent is made to limit the scope of the claims to any particular style or size trampoline.

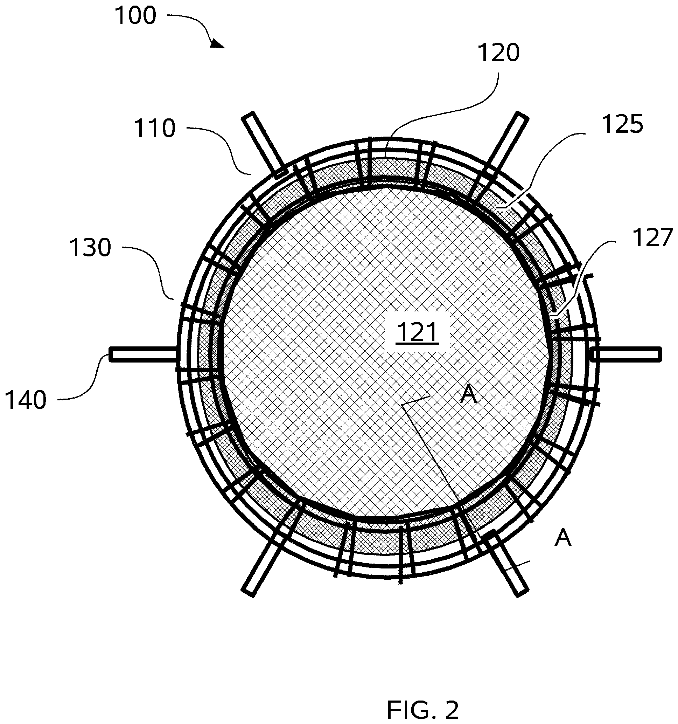

For example as shown in FIG. 2, a plurality of elastic cords are each relatively short, that is only about 2-3 times the gap between the frame 110 and the point of connection to the rebounding mat 120 and can be directly connected to the frame 110, but are more preferably wrapped around it, with the ends of each cord 130 returning to be connected proximal to the rebounding mat 120.

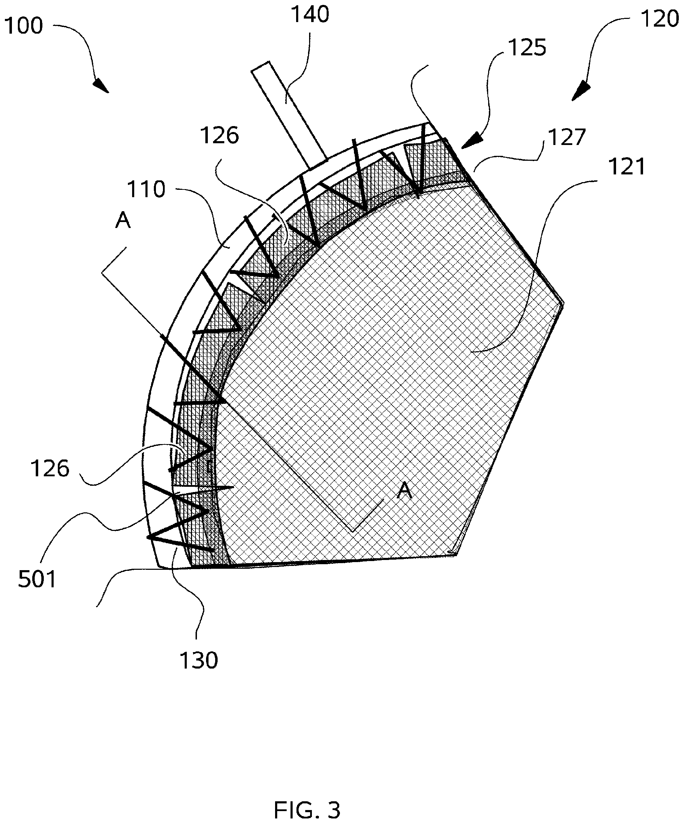

In contrast, in FIG. 3, at least one longer elastic cord 130 is alternatively wrapped around frame 110 with the intervening portion that then return and pass through a connection point or member on the periphery of the central portion 121 of the rebounding mat 120, below the outer annular portion 125. In this example, each elastic cord 130 can be considered as being tensioned along a serpentine path that alternates between the frame 110 and the edge of the mat's center portion 121.

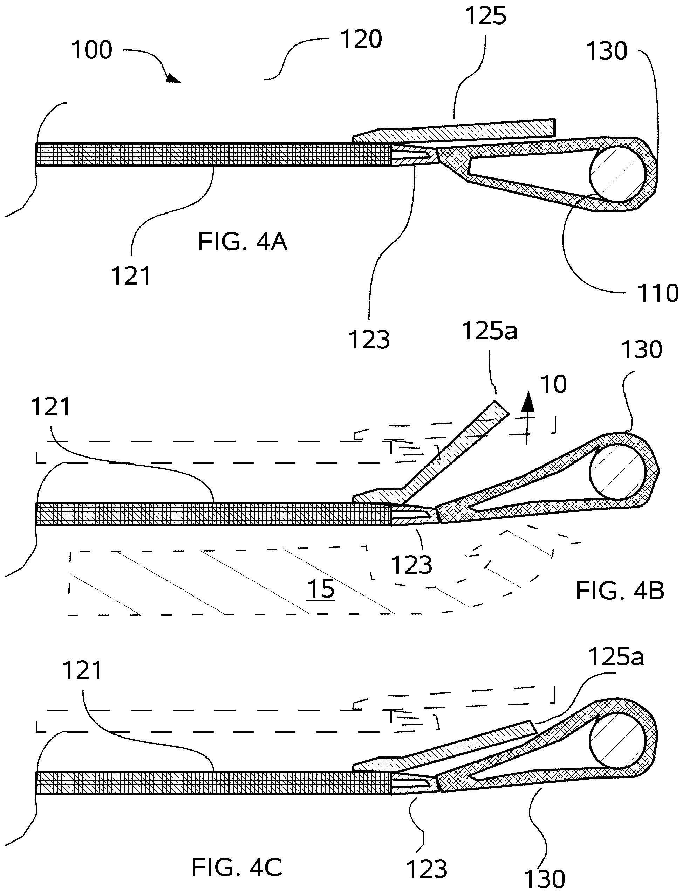

Preferably, when a surrounding outer portion 125 is deployed it is split or otherwise subdivided into segment that move relatively independently of the each other, as illustrated in FIG.4A-4C, which are partial radial cross-sectional elevations of a portion of a trampoline in the stages of rebounding by a user. FIG. 4A is the resting or equilibrium state, whereas FIG. 4B immediately after impact by the user and FIG. 4C is some time after FIG. 4B, as the system returns to mechanical equilibrium, as for example before another impact by the user.

It should be noted that at equilibrium in FIG. 4A, the outer portion 125 rests on the elastic cords 130. When the elastic cords are closely spaced as in FIG. 1 and 2, the user can actually bounce off this portion, extending the useful area. Wherever a user lands, the trampoline bed or mat 120 will immediately be forced below the equilibrium position by this impact as shown in FIG. 4B. However, the outer portion 125, being connected to the periphery of the central portion and not the frame 110 while being free to fall, will generally rise at the edge 125a, indicated by arrow 10. Generally the outer portion 125 conforms to whatever shape the elastic bands 130 take on extension. Preferably, the outer portion 125 is sufficiently light in weight so that the air pressure impulse 15 created by the descending mat 120 will actually push them upwards as shown by arrow 10. This minimizes drag on the elastic cords 130, and enables a strong rebounding response from the mat 120. Further, avoiding contact and drag from frictional contact of the outer portion 125 with the elastic members 130 minimizes wear of the fabric covering the elastic members 130, increasing their useful life.

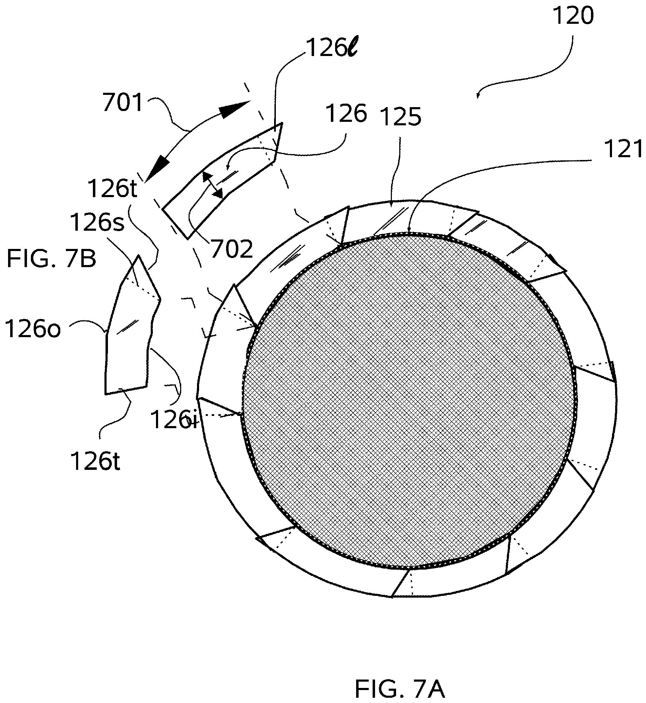

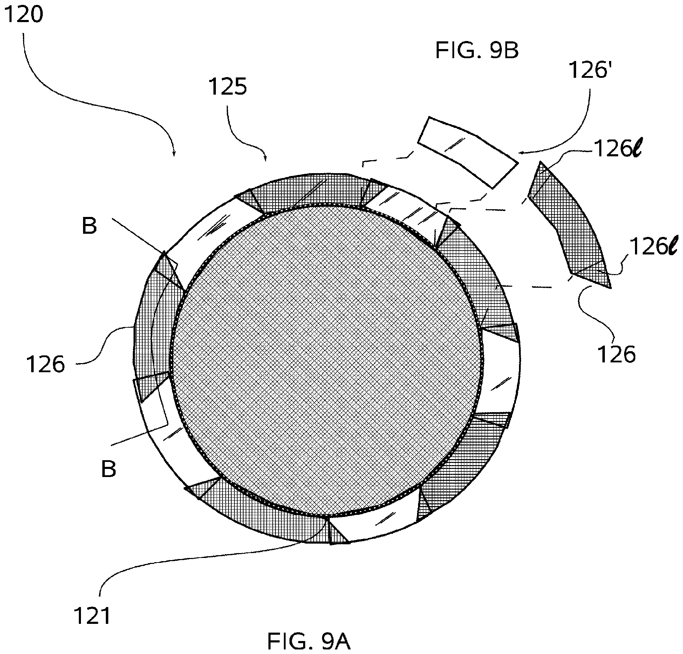

In the various examples it is preferred that the petals 126 of outer portion 125 dynamically conform to the shape of a conical section as the mat 120 moves up and down. In order to more fully accommodate this dynamic shape transformation it is more preferred that the free radial ends 126r of at least some annular portions or petals 126 that overlap are not connected to the free radial ends of the immediately adjacent annular portion, as shown in FIG. 7 and 9.

To enable such dynamic conformation, the petals 126 also preferably have a high aspect ratio to minimize the total friction, being arc segments that subtend between about 20 degrees to 75 degrees, depending on the trampoline diameter and the optimal stretching of the elastic members 130.

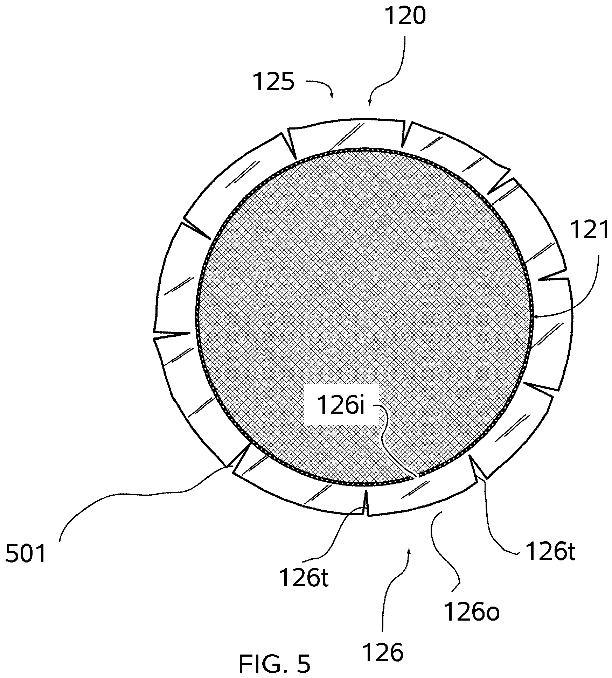

Accordingly, as shown in FIG. 5, 7 and 9, the annular portion 125 of the rebounding mat comprises a plurality annular sections or petals 126, each such annular section having two free tangential ends 126t and an outer free radial end 126o, where the inner radial end 126i is connected to the central portion of the rebounding mat 120. Petal 126 can be characterized by a tangential length, as indicated by double arrowed headed reference line 701, and a radial width, shown by double arrow headed references line 702. Preferably, at least one of the petals 126 (but more preferably a majority or all of the petals), have tangential length that is at least 3, but more preferably 4 or more time the radial width. More preferably, when adjacent petals 126 partially overlap, the overlapping portion of at least one of the petal 126ℓ (but more preferably a majority or all of the petals) has a tangential length that is less than the radial width of the petal 126.

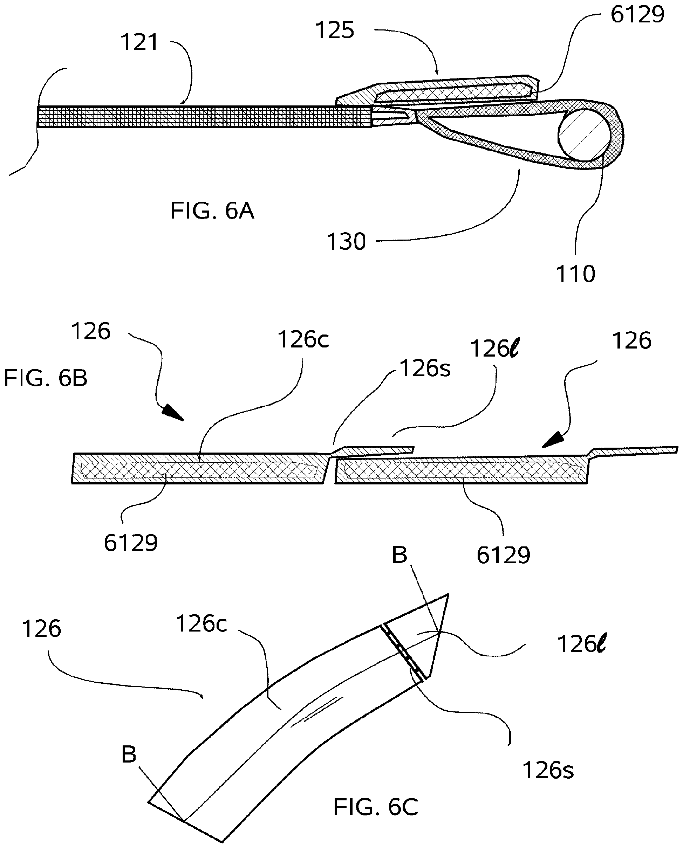

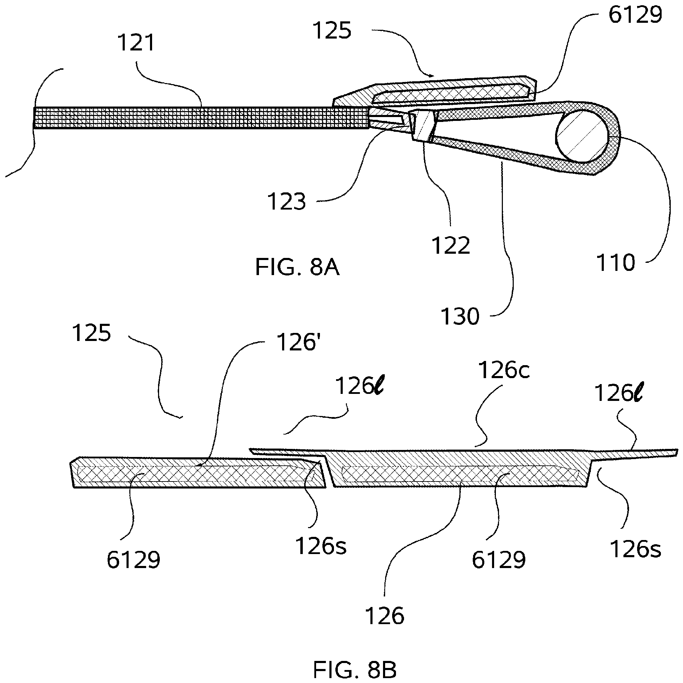

In the example of the mat 120 shown in FIG. 5, the annular portion 125 is subdivided by slits or gaps 501 to define discrete flapping petal 126. It should be appreciated form FIG. 5 through 8 that the petals 126 extend the mat edge beyond the tensioned area of the mat. The petal can vary in radial depth and optionally extend to or beyond the frame 110, but are not attached to it allowing independent. As shown in FIG. 6 and 7, petals 126 may be arranged so that one edge of the petal is on top of the adjacent petal, while the opposite edge of the petal is tucked under the petal on that side, creating a pattern of overlapping petals continuing around the circumference of the mat. In another variation, shown in FIG. 8 and 9 petals may be arranged alternating, where one petal is completely above both adjacent petals and the neighboring petals on either side are both completely under their adjacent petals. The overlapping portions of the petals can be rounded, triangular or any other convenient shape.

When the petals 126 overlap, it is also preferable that the overlapped portion not be more than from about 15% to 25% of the arc of the petal. Thus, for a trampoline with 6 petals, the non overlapping portion of each petal might have an arc length of about 60 degrees, with the overlapping portion ranging in arc length from about 9 to 15 degrees, for a total arc of about 69 to 75 degrees.

More preferably, the outer portion 125 and petals 126 is cushioned by internal padding 6129, as shown in FIG. 6. Further, by subdividing the outer portion 125 into petals 126, each petal can be separately padded as shown in FIG. 6A to further reduce the potential for friction for with elastic cord 130, as a padded fabric, being thicker than ordinary fabric would be slower to dynamically conform to the conical shape described above.

It is also preferable that the aspect ratio of the petals is higher when adjacent petal overlap as shown in FIG. 6 and 7, but less so for the example in FIG. 5 and 9. It is more preferable to minimize the friction of padded petals 126 by limited the padding to the central portion 126c that does not overlap with another petal, leaving the overlapping portion 126ℓ of at least one of the petals as a thin flat that has a seam 126s at the overlap of the adjacent petal 126 to promote the dynamic movement thereof, and their sliding one over or under the other adjacent petal 126.

It should also be appreciated that the cordlike elastic members 130 can be arranged in numerous alternative configurations without departing from an important purpose of expanding the trampoline rebounding area. For example, one or more such elastic members 130 can be in a serpentine configuration to connect a plurality of grip members 123 to the frame 110, as shown in FIG. 3, or there can be a single elastic member 130 per grip member 123, as shown in FIG. 1 and 2.

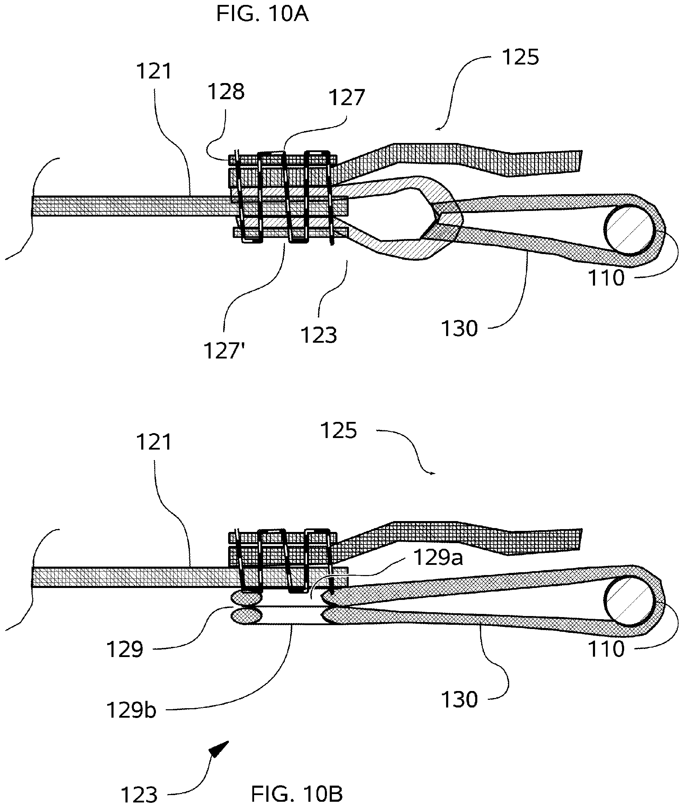

It should be further appreciated that the petal 126 should be constructed taking into account the supporting nature of the elastic members 130. When the elastic members 130 are closely spaced elastic cords as shown in FIG. 1, the material that forms the petal 126 can be relatively thin and use light padding to distribute the user's weight on the elastic cords 130. However, when the spacing is wider, or the elastic cords are very narrow, it may be desirable to use thicker material and/or padding to form petals 126, and thicker and/or firmer internal padding 6129. It should be appreciated that such spacing of the elastic member is determined by the density of the grip members 123 around the periphery of central portion 121 of the rebounding mat 120, as well as the cross-sectional shape of the elastic members 130. Thus, the padding thickness may also take into account the density and size of the connecting grip members 123 and any intermediate connector member 129 described below and in FIG. 10-13. It should be appreciated that as the example of the intermediate connector member 129 described below are fairly rigid, it is preferably that they are attached to the grip member 123 in a manner that disposes then under the portion of the petals 126 having internal padding 6129.

The grip members 123 that connect the mat 120 to the frame 110 via elastic cords 130 can be simple loops of tough fabric, and may include an intermediate connector or coupler 129 body that is preferably, but not necessary covered by the outer portion 125 of the rebounding mat 100, as shown in FIG. 8A. The central 121 and outer 125 portions of the rebounding mat 120 can be integral or stitched together, or attached with other means such as hook and loop fasteners, rivets, button, snaps and the like.

FIG. 10A illustrates an example useful for understanding the invention in which the loop 123 and the outer portion 125 are both stitched to the periphery of the central area 121 after being covered at the top and bottom by reinforcing fabric strips 127 and 127' respectively. The stitching is represented by thread 128.

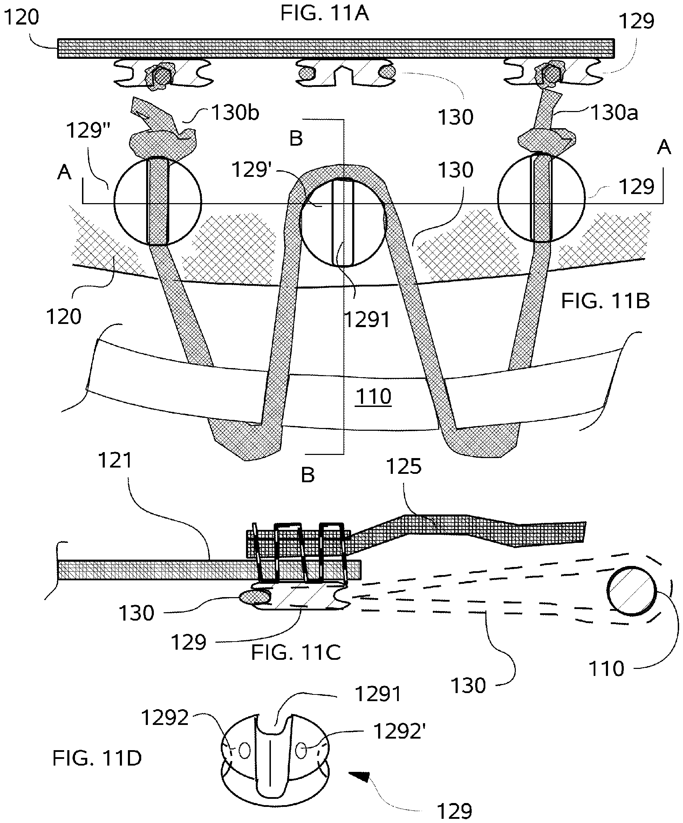

FIG. 10B of an alternative example in which elastic bands 130 are attached to the circumference of the mat 120 at an elastic band coupler 129. The coupler 129 may be an integral and generally cylindrical unit that has a sculpted annular concave depression around the periphery to support the elastic cord 130 of the same or smaller cross-section and shape. As shown in FIG. 10B, coupler 129 is attached to below both the periphery of the central area 121 and the mat's outer portion 125, which are also stitched together as shown in FIG. 10A. Alternatively, the coupler 129 may be attached to mat 120 by means of a through screw or bolt which holds its upper part 129a and lower part 129b together on the top and bottom of the mat 120. Coupler 129 may also be attached via a tab sewn onto the mat 130. The upper part 129a and lower part 129b each receives the respective upper loop and lower loop of elastic bands 130. Other examples for the connection of elastic bands 130 include in-molded hooks which can form an elastic band coupler 129. Further examples and embodiments for such gripping members 123 and connecting or coupling members 129 are illustrated in FIG. 11-25 which are described in more detail below.

In FIG. 11A-11D the coupler 129 is a single disk that has sculpted annular concave depression around the periphery to support the elastic cord 130 of the same or smaller cross-section and shape. The coupler disk 129 also has a transverse slot 1291 that extends to bisect the disk 129 through an upper or lower half thereof. On the opposite side of the transverse slot 1291 the disk 129 may include holes that extend from the top to the bottom thereof 1292 and 1292' for receiving fastener for connecting to the rebounding mat. It should be appreciated from FIG. 11B, that a single elastic cord 130 is used to connect the rebounding mat 120 via three such couplers 129 by wrapping around the central of the three, 129', with the end on opposite side of coupler 129' extending outward to wrap around the frame 110, before returning to be secured by the surrounding couplers 120 and 129". The ends 130a and 130b of elastic cords 130 have knots or bulbous protrusions that are grasped by the edge of coupler 129 and 129" when the cord portion just before the knots is placed in the transverse slot 1291. The ends 130a and 130b of elastic cords 130 are grasped by the edge of coupler 129 and 129" when the cord portion just before the knots is placed in the transverse slot 1291.

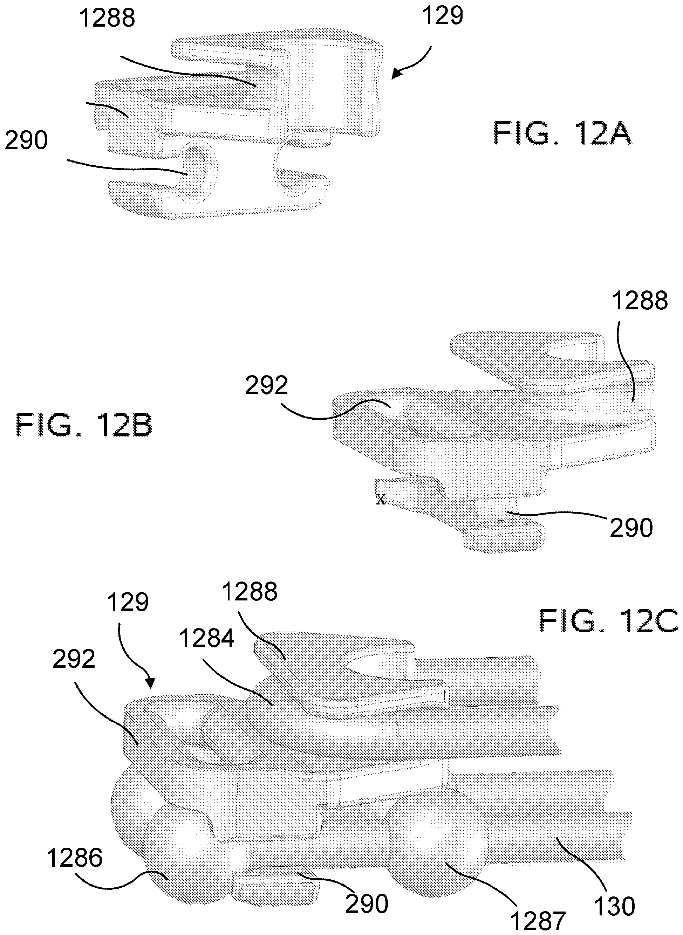

FIG. 12-21 illustrate an embodiment in which a single coupler 129 is simultaneously wrapped by the elastic cord 130 and holds the opposing ends 130a and 130b.

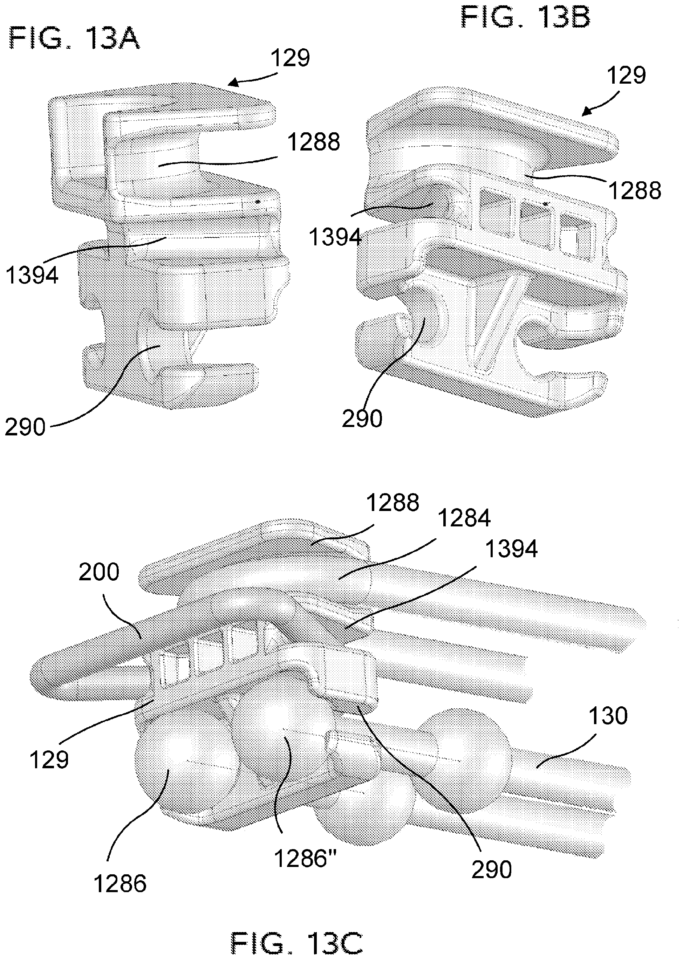

One such alternative embodiment to the bungee clip/coupler 129 shown in FIG. 10B is seen in FIG. 12 and 13. The coupler or bungee clip 129 has loop retaining feature 1288 for supporting the elastic cord 130, nominally a bungee cord, and also has two bores 290 with side openings for retaining the terminal ends of the bungee. Webbing attachment feature 292 is a handle or flat slot is for securing flat webbing that is preferably deployed as the grip member 123. In FIG. 12C connector/bungee clip 129 is shown as installed with a central portion of the bungee between the ends formed into a loop 1284 that is seated in the loop retaining feature 1288. The loop retaining feature 1288 is preferably a smooth sculpted annular concave depression around a portion of a cylindrical surface. Also shown is bungee 130 with bungee terminator 1286, which is optionally either a knot or the bulbous protrusion, and is secured to a fixed location on the bungee 130 as shown. Optionally, a second terminator 1287 secured to the bungee 130 inward of the first terminator 1286 may also be used to attach the bungee 130 to the coupler 129, providing an adjustment to the length of the active bungee section. Thus as the elastic cord or bungee tension decreases over time due to use, it may be incrementally adjusted to maintain the tension within the desired range, greatly extending the useful life of the elastic cords and avoiding the time and expense to replace these components. A further benefit is that the tension of the bungee 130 may be adjusted to the weight and jumping preference of the user.

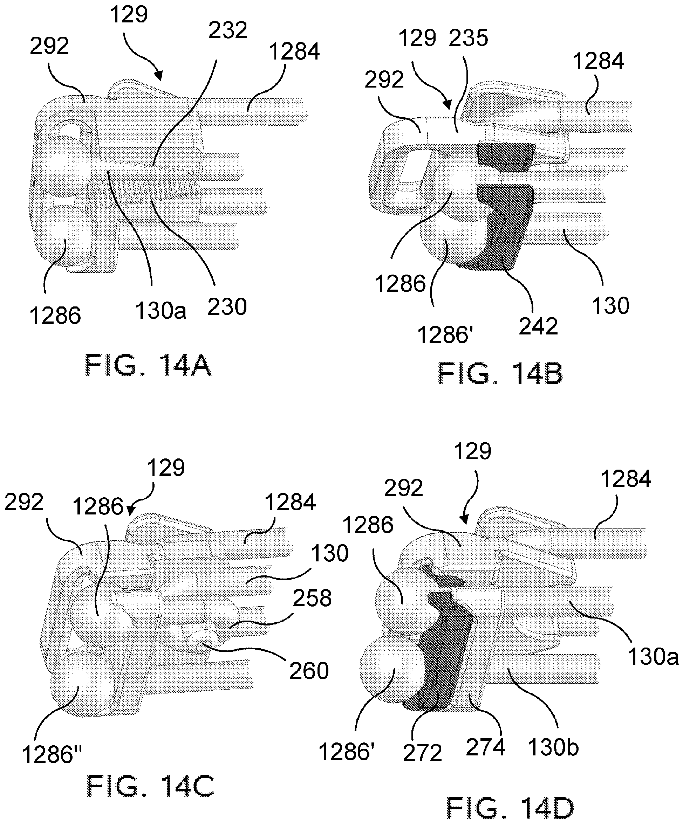

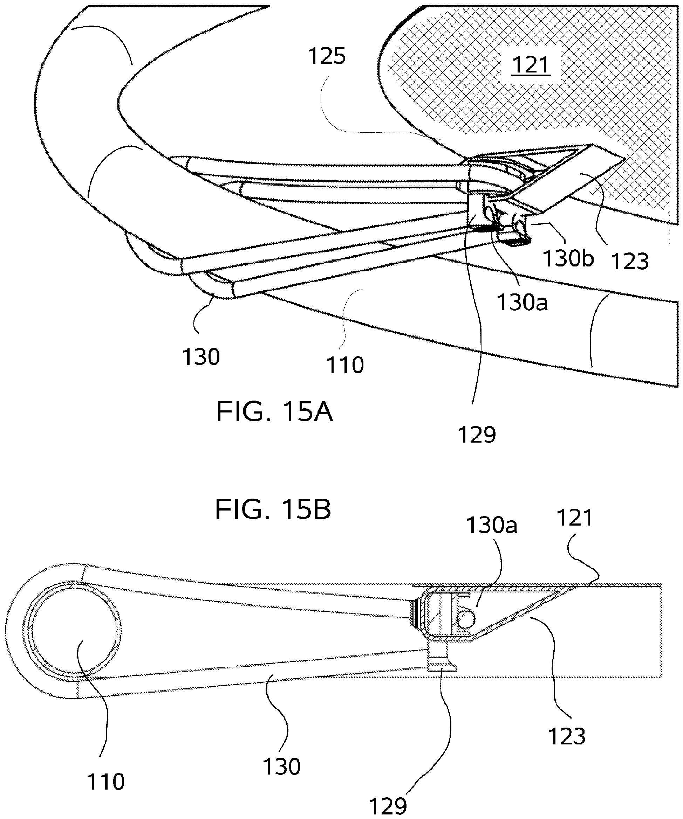

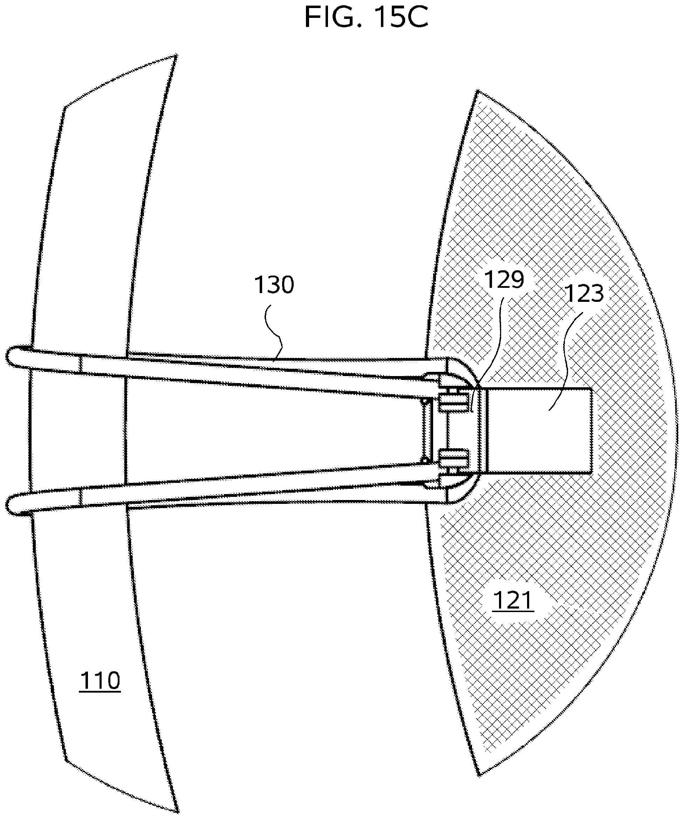

FIGS. 13A-C shows a bungee clip/coupler 129 capable of being attached to the triangular or V-ring 200 of a typical trampoline, to allow for the use of bungee 130 instead of the typical metal spring. In this embodiment, the V-ring 200 and any webbing holding it to the periphery of the central portion 121 of the rebounding mat would be considered a grip member 123. Bungee clip or coupler 129 includes loop retaining feature or handle 1394, a V-ring retaining slot of having V-shaped indentation 1298 to receive two side of the ring 200, as well as the bungee terminator retaining features 1286. FIG. 14C shows the bungee clip 129 with the central looped portion of bungee cord 1284 seated in this loop retaining feature 1288. Also shown is bungee 130 with bungee terminator 1286 inserted into bungee terminator retaining feature 290. V-ring 200 is shown in V-ring retaining feature 1394. In a typical installation, the V-ring 200 is sewn into a loop of webbing attached to the trampoline mat, such as 123 in FIG. 15.

FIGS. 14A-D illustrate additional embodiments of a coupler or bungee clip 129 similar to that shown in FIGS. 13A-C and all provide the user with the ability to adjust the active length of the bungee or similar cord like elastic members 130. FIG. 14A illustrates a coupler 129 which has surfaces 232 and 230 which form a serrated V, which forcibly secures the bungee end 130a at the desired length. It's method of operation is similar to that of a cleat as used in a sailboat. In such an embodiment, the cord like elastic member may be grasped at two or more alternative positions at either or both opposing ends by a corresponding chevron shaped appendage attached to or surrounding the member 130, which the chevron (s) pointing to the center of the cord. FIG. 14B shows a clip 129 having lower body 242 which may be adjusted relative to upper body 235 so as to vary the position of bungee terminators 1286 and 1286' of bungee 130, and thereby adjust the tension of said bungee. The method of adjustment may utilize a ratcheting mechanism, a rail, or a track which provides for the movement of lower body 242 relative to upper body 235 and may be locked in the desired position. An alternative embodiment of a clip 129 which allows for the adjustment of bungee tension is shown in FIG. 14C. As shown coupler/clip assembly 129 allows additional bungee tension to be added by wrapping a portion of the bungee 130 in a loop 258 about post 260. The post 260 descends from the portion of the clip 129 that forms loop retaining feature 1288. In the last of these embodiments shown in FIG. 14D, the coupler clip assembly 129 includes a nesting spacer 272 that engages into bores 290, extending the ends thereof such that the location of bungee terminators 1268 and 1268' are moved distal from the end of the bores that they would normally engage. The effect of inserting this nesting spacer 272 is to increase the stretched length of the bungee and thus increase bungee tension. In the embodiment of FIG. 14A deploying a cleat, the nesting spacer may be a chevron shaped cleat that is inset into the first cleat.

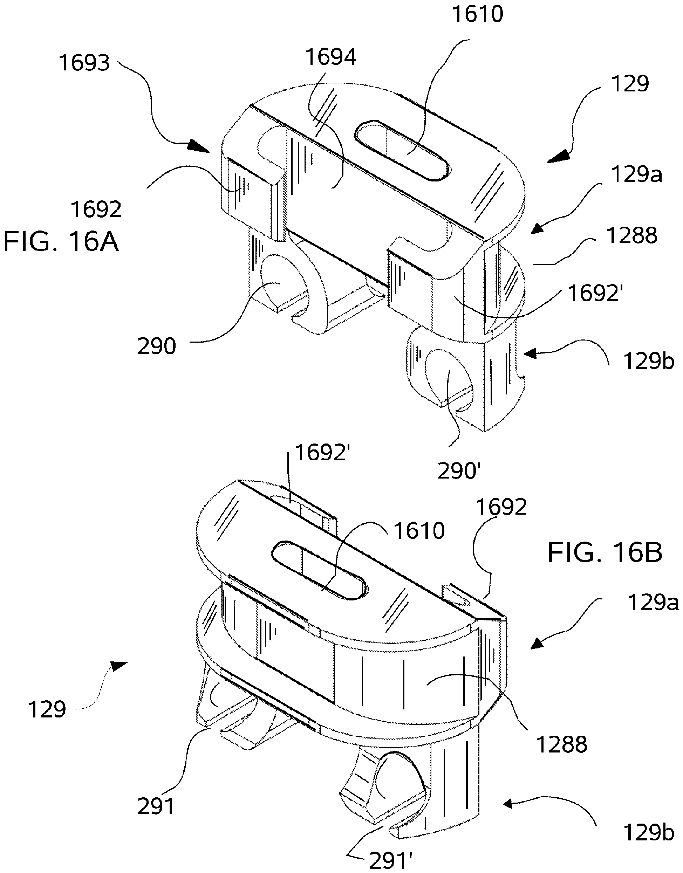

FIG. 15 to 18 illustrate another embodiment of a connecting or gripping member 129 and its means for attachment to the perimeter of the trampoline rebounding mat. As shown in FIG. 15A, coupler 129 is attached to below the periphery of the mat's outer portion 125, via a tab or flap loop of strap 123 that is stitched to this outer periphery . As illustrated in more detail in FIG. 16B, the coupler 129 has a rounded channel 1288 on the front surface of the upper portion 129a to receive the central portion of the looped elastic cord 130.

The lower part 129b of coupler 129 receives the opposing ends of the elastic cord that are at opposite sides of this central portion. The ends of the elastic cords 130a and 130b are held in the spaced apart bores 290 and 290' formed in the lower portion of the coupler 129b. The elastic cord 130 may be inserted or removed from each bore 290 and 290 from the respective side openings 291 and 291' also formed in the lower portion 129b. On the opposite and back side of the upper part 129a is a grasping member 1692 having opposing arms 1693 and 1693' that form a partially open slot 1694 to releasably secure the fabric tab 123. The hole 1610 that extends vertical between the upper and lower portion 129a and 129b is preferred when the coupler 129 is injection molded plastic to provide even shrinkage of material in the solidification process after molding to consistently provide the same exterior dimension of the coupler as the mold shape.

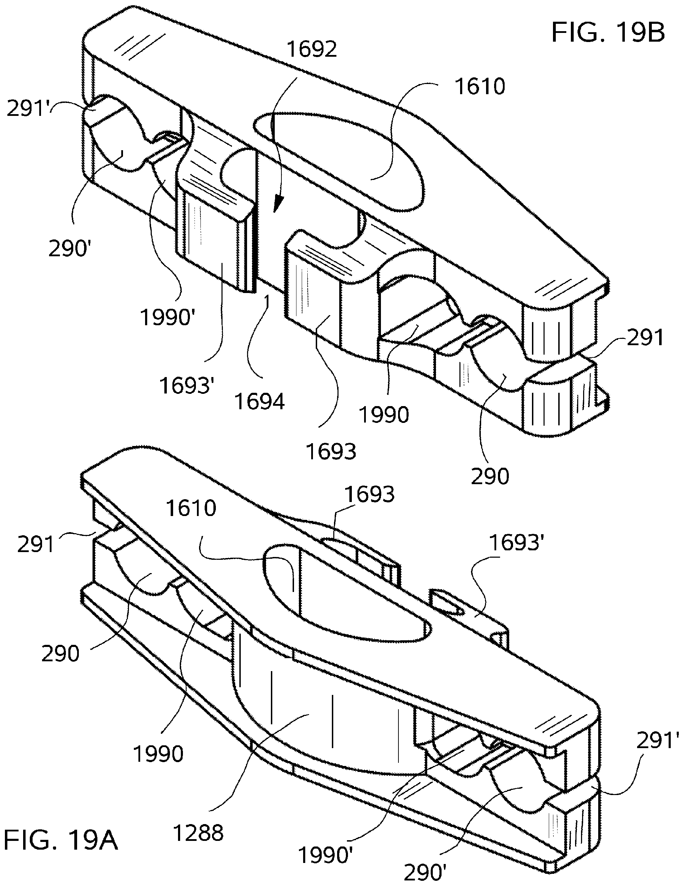

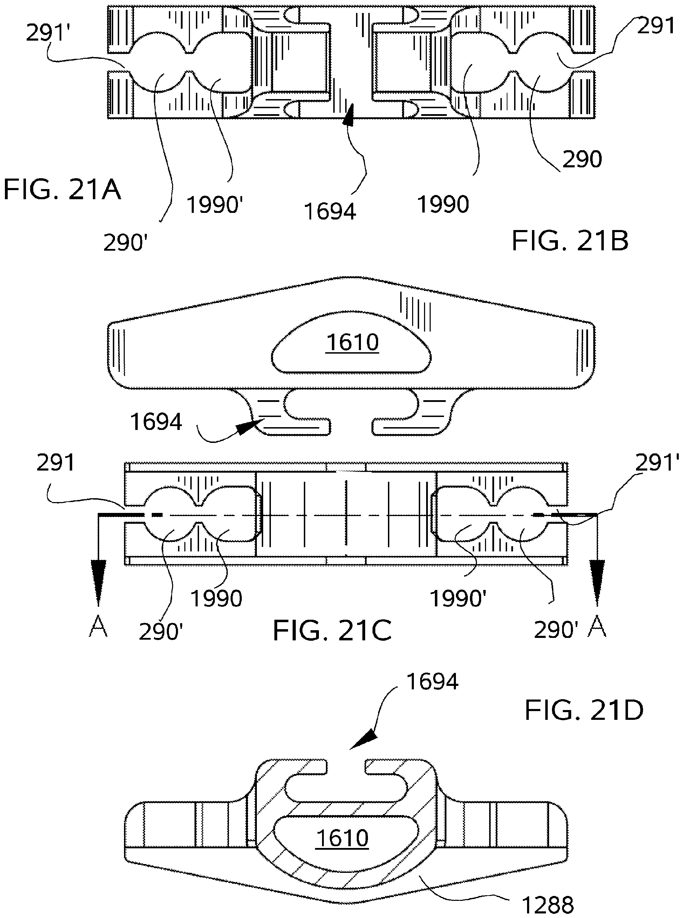

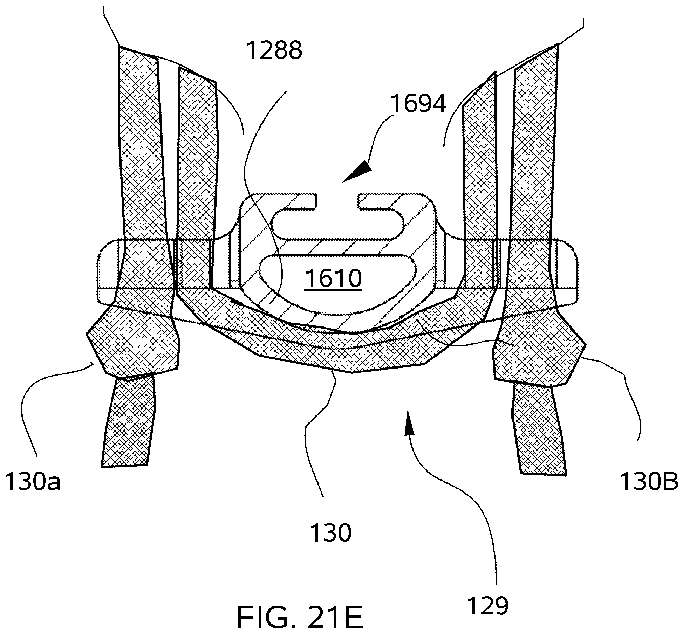

FIG. 19 to 21 illustrate another embodiment of a connecting or gripping member 129 having similar means for attachment to the perimeter of the trampoline rebounding mat as that shown in FIG. 15-18. Disposed in the horizontal center of the front side of gripping member 129, shown in FIG. 19A, is the rounded channel 1288 that receives the central portion of the looped elastic cord 130. However, in this embodiment of coupler 129 the ends of the elastic cords 130a and 130b are held in the spaced apart bores 290 and 290'on the same horizontal portion of the coupler 129 as the rounded channel 1288 being separated from the rounded channel 1288 by inner bores 1990 and 1990'. The inner bores 1990 and 1990' receive the portions of the elastic cord 130 that are supported on the rounded channel 1288. The inner and outer bores are shown as optionally connected by a narrow channel. On the back side of gripping member or coupler 129 is a grasping member 1692 having opposing arms 1693 and 1693' that form a partially open slot 1694 to releasably secure the fabric tab 123 shown in FIG. 15A-C. The ends of the elastic cords 130a and 130b are held in the spaced apart bores or apertures 290 and 290' formed in the end of the coupler 129 most distal from the opposing arms 1693 and 1693', which are disposed farthest from the horizontal center of the coupler 129. The elastic cord 130 may be inserted or removed from each bore 290 and 290 from their respective side openings 291 and 291' which are in formed narrow vertical sides of the coupler 129. FIG. 21E is a cross-sectional plan view showing the connected path of the elastic cord 130, including ends 130a and 130b as retained by edges around bores 290' and 290 respectively. When the coupler 129 is formed by injection molding plastic it preferably includes the hole 1610 that extends vertically though the center of coupler 129 as it ensures even shrinkage of material in the solidification process after molding to achieve exterior dimension of the coupler 129 that are consistent with respect to the mold shape.

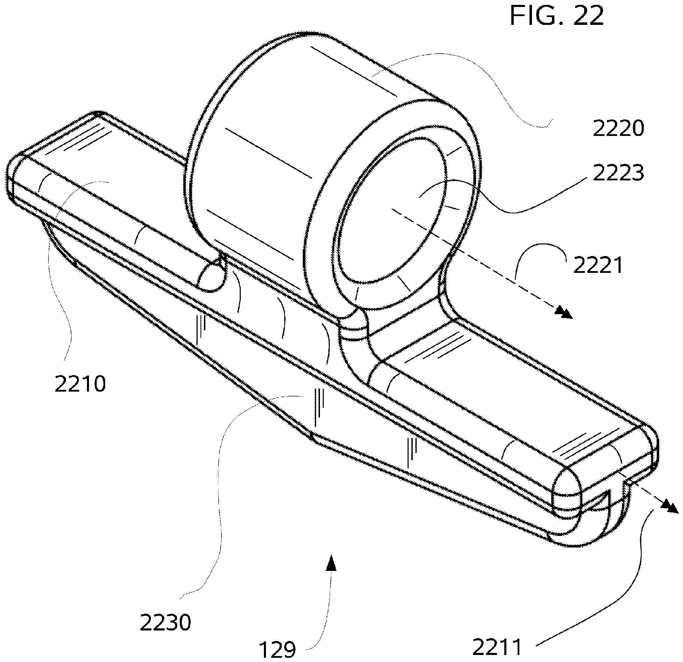

FIG. 22 to 25 illustrate an example of a connecting or gripping member 129 intended for attaching the perimeter of the trampoline rebounding mat 120 to the frame 110 of the trampoline using one or more elastic cords 130 wound in a serpentine fashion as shown in FIG. 3.

In this example connector 129 has an elongated rectangular body 2210 with a bored centrally disposed cylinder 2220 attached to the center at the upper surface or side thereof. The cylinder 2220 is disposed with its principal cylindrical axis 2221 aligned, but off set above the principle body 2210, being laterally disposed generally at the center thereof. The body 2210, being a flattened rectangle, has a principle axis 2211. This cylinder 2220 has a central bore 2223 that is coincident with the principal cylindrical axis 2221 for receiving an elastic cord 130. Further, a flat triangular region 2230 is preferably is disposed on the opposite side of the body 2210 from the cylinder 2220. The flat triangular region 2220 extends outward to its apex 2230a in the direction transverse to axis 2211.

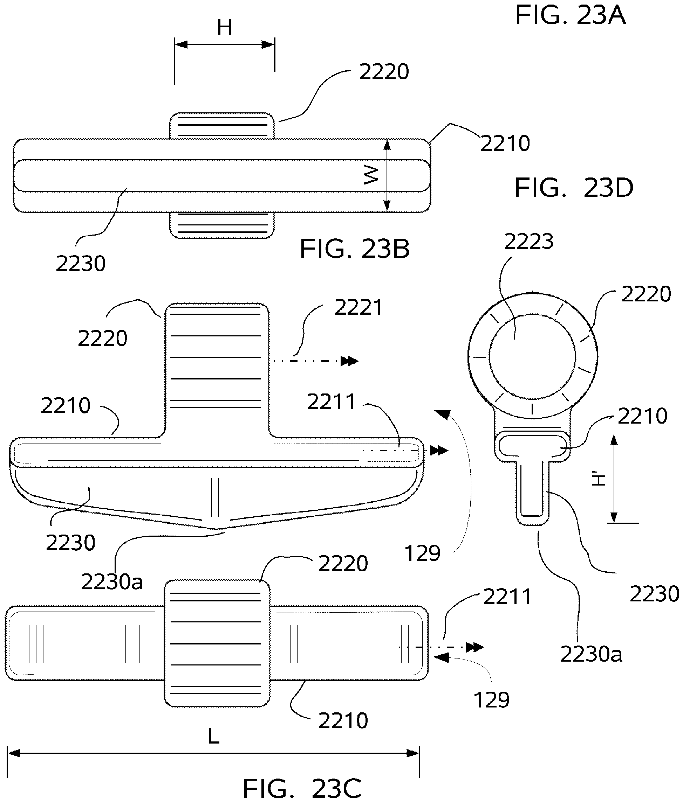

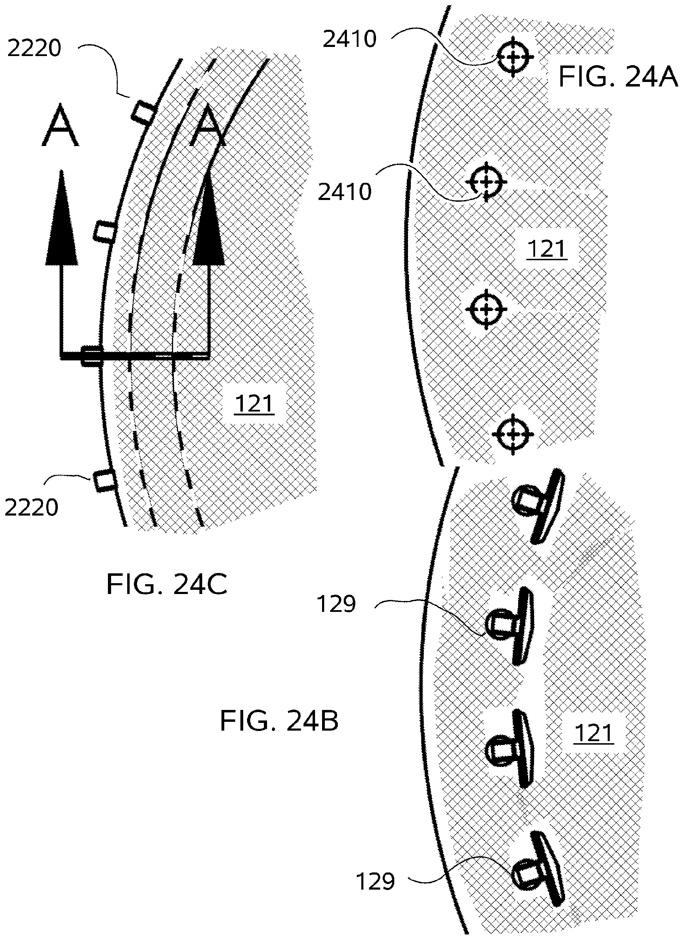

As shown in FIG. 24A and 24B, the mat 120 has holes 2410 cut close to the perimeter 125, the holes 2410 being slightly larger than the height, H, of the cylinder, but much less than the length, L, of the body 2210. The inside edge of the holes 2410 are set inward form the perimeter 125 by a distance that is at least the combined height of the principal body and the triangular portion, H', in dimension of coupler 129, which is indicated in FIG. 23D. Generally the inset distance is slightly greater to account for the width, W, of the coupler 129 so that the folded portion of the edge clears the apex 2230a so that it can be fastened to the rebounding mat 120, such as by stitching.

As shown in FIG. 24B, to assemble the mat, a coupler 129 is ideally attached to the periphery of the mat at each hole 2410 location. This is accomplished by setting the cylinder portion 2220 direction over the slightly larger diameter the holes 2410, with the body principal axis 2211 lying transverse to the radial direction of the circular mat 120. Then, as shown in FIG. 24C, the edge portion of the mat 120 that bisects the holes 2410 is folded over towards the center of the mat to cover the body portion of the connectors 129, so that the cylinder portion 2220 extends through the holes. Then at least one, but preferably two or more seams are stitched to connect the folded over portions of the mat, thus securing the body and triangular portion within the seam, holding the connector 129 in place. Hence, the cylindrical portion 2220 of the connector 2220 having the bore 2223 then extends outward from the mat so that the elastic cord(s) 130 can extend through the bores 2223 to connect the mat 120 to the frame 110.

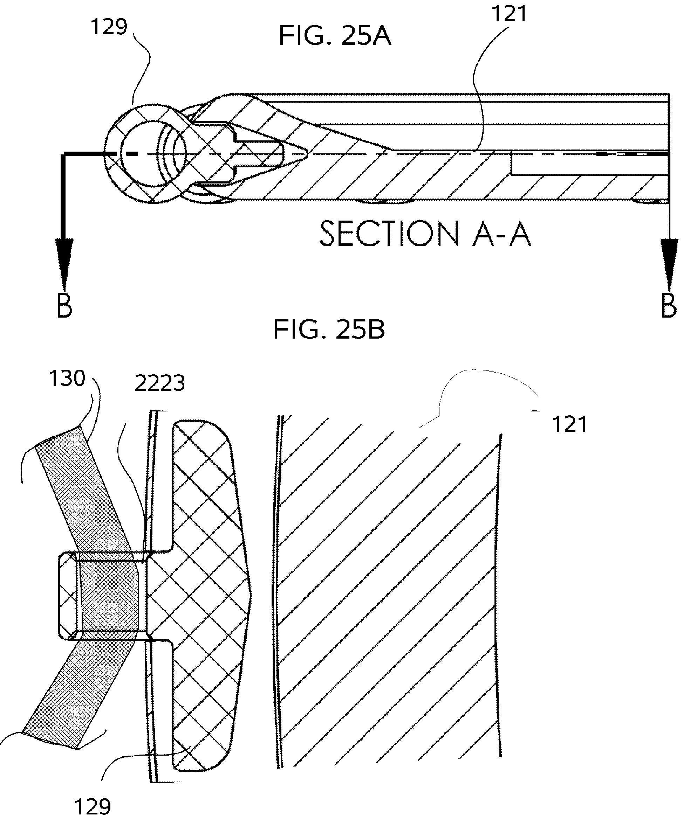

Thus, as shown in FIG. 25A, corresponding to section line A-A in FIG. 24C, the bore 2223 extends beyond the periphery of the folded edge of the mat 130, so that it can receive the single elastic cord 130 that is wrapped in a serpentine fashion between the periphery of the mat 130 and the frame 110.

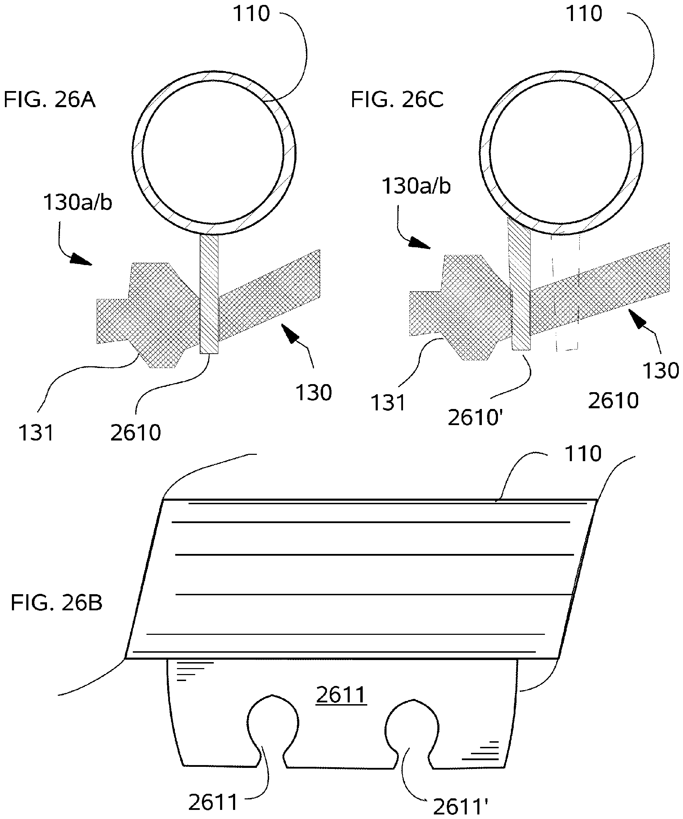

To retighten the elastic cord 130 in the serpentine configuration of FIG. 3 and FIG. 25, at least one knots or bulbous protrusions 131 at either one or both ends 130a and 130b of the elastic cord 130 is preferably secured as shown in FIG. 26A in a first grip member 2610 on the frame 110 and then displaced to a be secured in a second grip 2610'member more distal from the last connector 129 than the first grip member. The grip member can simply be a plate 2610 with two or more adjacent partial holes 2611 and 2611' that accommodate the diameter or the cord, of which the edge of the partial holes supports the knots or bulbous protrusion 131 at ends 130a or 130b. Such a plate is illustrated in FIG. 26B. Alternatively, the partial holes 2611 and 2611 need not be adjacent in the tangentially direction on the frame 110, but can be radially adjacent, as shown in FIG. 26C. It should be appreciated that the frame may alternatively employ just a single grip member 2610, and that one or more ends of the cord 130 may have proximal thereto a plurality of adjacent bulbous protrusions or other appendages that can mate to and grasp grip member 2610. It should further be appreciated that grip member 2610 can take the form of any other example of a means for gripping the end portion of an elastic cord disclosed herein, as well as equivalents thereto.

It should be appreciated that although the application describes a variety of couplers or gripping members for use with serpentine wrapped and single wrapped elastic cords, such diverse couple or gripping member types can be used together on the periphery of the rebounding mat. In the spirit of the serpentine wrapping example above, the end of the cord 130a/b need not terminate at the frame, but can also terminate in any of the end gripping portion of the couplers shown in FIG. 10 through 21, which provide for grasping the elastic cord at two alternative positions to vary the tension thereon. Further, the serpentine wrapping configuration may use a plurality of elastic cords to traverse the entire perimeter of the trampoline frame 110 and rebounding mat's 120 perimeter 125.

FIG. 27-29 illustrate another example that deploys a plurality of elastic cords 130 that connect the frame 110 to the ends, perimeter or central portion of the rebounding mat 120 using two different type of couplers, specifically a first coupler 129 (shown in FIG. 28A-D) and a second coupler 129' (shown in FIG. 29A-F). Couplers 129 and 129' alternate in placement around the periphery where they connect to the rebounding mat 120. Couplers 129 and 129' can optionally both deploy the slot 292 to securely receive flat webbing that is preferably deployed as the grip member 123 for connection to the rebounding mat 120. Preferably, each of coupler 129 and 129' are attached to below the periphery of the mat's outer portion 125, via a tab or flap loop of strap 123 that is stitched to this outer periphery before petals that form an outer skirt.

As illustrated in more detail in FIG. 28, the coupler 129 has a rounded channel 1288 on the back surface to receive the central portion of the looped elastic cord 130. Each cord 130 is connected to the trampoline mat at ends 130a and 130b by adjacent first couplers 129, with a central portion there between again connected to the mat 120 via the intervening second coupler 129'. The portion of the elastic cord 130 between adjacent couplers 129 and 129' is wrapped around the frame 110, before returning to be secured by the surrounding couplers 129'. The ends 130a and 130b of elastic cords 130 have at least one but preferably plural adjacent knots or bulbous protrusions that are grasped by the edge of coupler 129 and 129' when the cord portion just before the knots is placed in the transverse slot 1291. Thus, coupler 129' receives the opposing ends of the elastic cord that are at opposite sides of this central portion. The ends of the elastic cords 130a and 130b are held in the spaced apart bores 290 and 290' formed the edge portions of the coupler 129. The elastic cord 130 may be inserted or removed from each bore 290 and 290 from the respective side openings 291 and 291'.

it should be appreciated that the couplers 129 disclosed herein while suitable for low cost manufacture by injection molding plastic, can be made by other processes, as well as be formed of wire to provide the same or equivalent function described herein. Further the elastic cords 130 can terminate in other mating features for connection to the couplers 129, such as hooks, clips, latches and the like, as well as the knots and bulbous protrusions disclosed in the preferred modes above.

Elastic cords covered with a woven fabric, typically referred to as bungee cords, undergo continuous fatigue when stretched between a low and high tension state when deployed as the elastic member in supported the rebounding mat of a trampoline. The low tension state is the minimum strain to tension the rebounding mat at equilibrium position, whereas the maximum tension state is reached by the maximum mat displacement by the user. During this fatigue the cords effectively soften in that the tension applied to the rebounding mat in the equilibrium state decreases.

It has been discovered that such loss in stress can be overcome by repeated re-tensioning, that is re-stretching the fabric covered elastic cord in the equilibrium state. However, in the preferred embodiments of the invention the elastic cord is selected for such repeated re-tensioning according to the criteria that is best appreciated with reference to FIG. 30 that illustrates the stress elongation curves of three different commercial bungee cords, that is elastic cords covered with a woven fabric.

However, in any case it is first generally preferred that the rubber used in the fabric covered elastic cord be of high quality to exhibit by itself an ultimate elongation (before significant strain hardening or failure) of at least about 200%, but more preferably 300%, but most preferably over 350%. When such elastic cords are covered with woven fabric, the apparent modulus (slope of the stress strain curve), which is referred to as strain hardening, will increase when the strain limit of the woven fabric is reached. This strain level, is labeled "T" for each of the commercial bungee cords labeled "A", "B" and "C" in FIG. 30.

In so far as the actual tension applied to a rebounding mat of the trampoline, any number of lower modulus elastic cords can be provided to reach the same total tension of fewer elastic cords.

As a non-limiting example, in the case of trampolines sized so that it is preferable that elastic cords are initially tensioned at about 18 Lb-f in the equilibrium state, also reach 35-40 Lb-f, when the rebounding mat almost reaches the floor. This range of force is also indicated on the graph in pounds-force (Lb-f) and Newton (N) units.

FIG. 31 illustrated the force decrease when such a cord is cycled between strain levels typical of the low and high tension states. After about 1 million (M) cycles, the low tension drops by about 3 lbs to about 15 Lb-f with an almost corresponding drop in the high force level. Each dramatic jump in force represents a re-tensioning in the test apparatus by re-setting a terminal knot position to return the force to the initial level of about 18 Lb-f. It is truly surprisingly and unexpected re-stretching the cord repeated times (after about 1M, 3.8M, 6.4M and 9M cycles) greatly extends the useful life to more than 1000 %, as it is only after about 10 M cycles that the high tension level greatly exceed the objective of a maximum force of about 40 Lb-f. These results are fully summarized in the Table below:

| **Cycles** | **Initial Low Force** | **Initial High Force** | **Knot Position** | **Notes** |
|---|---|---|---|---|
| 0 | 18 | 38.5 | 1:1 | First Position |
| 1,025,300 | 17.4 | 37.8 | 1:2 | |
| 3,846,700 | 17.6 | 37.2 | 2:2 | |
| 6,351,450 | 19.5 | 41.1 | 2:3 | |
| 8,997,440 | 18.4 | 55.25 | 3:3 | |
| 10,406,041 | 13 | | 3:3 | Failure |

It is believed that the increase in maximum force after the 5th re-stretching is caused by reaching the effective strain limit of the fabric covering, indicated as transition point "T" in FIG. 30.

Hence, depending on the stress-strain and cyclic fatigue behavior of fabric covered elastic cords that are commercial available, it may be more preferred to deploy a large number of elastic cords that reach the "T" point in FIG. 1 at higher strain levels (about 2.6X for "C" and 2.0X for "B" in contrast to the lower level of 1.8X for "A") to provide the most opportunities for re-tensioning to extend the products useful life without replacing all the elastic cords. Accordingly, it is further preferred that the elastic cords are re-tensioned when the equilibrium force drops about 25% but more preferably by about 16%, that is from about 18 Lb-f to 13 Lb-f.

It is also preferable that the re-tensioning occur no further than when the maximum stress reaches, when the rebounding mat is fully extended, no more than about 150% or the initial value, but more preferably no more than about 125% thereof.

Thus it is believed that the ultimate limit to multiple re-tensioning to extend the useful service life of elastic cords may be the means to apply additional tension, such as by typing knots to provide a shorter length or a closer end grip point, as well as reaching close to ultimate elongation of the covered fabric sheathing. The ultimate elongation of the fabric is not necessarily the strain that will tear the fabric, but rather a straining level at which the fabric limits the elasticity of the rubber that will induce further abrasion of the fabric threads on each other, or induce abrasion ore related deterioration of the elastic cord itself.

From the forgoing it should be appreciated that numerous variations are possible, and thus the invention is not intended to be limited to the specific arrangements shown in some of the drawings. While the invention has been described in connection with a preferred embodiment, it is not intended to limit the scope of the invention to the particular form set forth, but on the contrary, it is intended to cover such alternatives, modifications, and equivalents as may be within the scope of the invention as defined by the appended claims.

## Claims

1. A rebounding surface for a trampoline or a rebounder comprising:
a) a closed frame (110) that is horizontally disposed,
b) a rebounding mat (120) having at least a central portion (121) thereof elastically suspended within the closed frame (110),
c) a plurality of cordlike flexible elastic members (130), each having a first end and an opposing end for coupling the central portion (121) of the rebounding mat (120) in elastic suspension to the frame (110),
d) a plurality of couplers (129) attached to the perimeter of the central portion (121) of the rebounding mat (120), each coupler (129) being configured to couple a cordlike flexible elastic member (130) to the rebounding mat (120),
e) wherein at least one of the plurality of cordlike flexible elastic members (130) and at least one of the plurality of couplers (129) is configured to attach the cordlike flexible elastic member (130) to the same coupler (129) at at least two alternative positions to provide an adjustment of an active section of the cordlike flexible elastic member (130) between the first end and the opposing end to provide at least two alternative levels of tension to the rebounding mat (120).

2. A rebounding surface according to claim 1, wherein the at least one cordlike elastic member (130) is connected to the rebounding mat (120) and the frame (110) in a serpentine path having segment that alternatively connect opposing sides of each coupler (129) to alternative positions along the perimeter of the frame (110).

3. A rebounding surface according to claim 1 further comprising a plurality of cord like elastic members (130), wherein at least some of the plurality of cord like elastic members (130) are folded at the central portion thereof, with the folded central portion thereof wrapped around the coupler (129) and each of the two portions thereof between the central portion and the first and opposing end returning to wrap around an adjacent portion of the frame (110) such that the first and opposing ends are tensioned on return to connect at the periphery of the rebounding mat (120) to provide tension thereto.

4. A rebounding surface according to claim 1 comprising:
a) a plurality of first couplers (129);
b) a plurality of second couplers (129), wherein each of the first and second couplers (129) of their respective pluralities are attached to the perimeter of the central portion (121) of the rebounding mat (120), and each of the first couplers (129) is located between adjacent second couplers (129),
wherein the plurality of cord like elastic members (130) are folded at the central portion thereof, with the folded central portion thereof wrapped around the first coupler (129) and each of the two portion thereof between the central portion and the first and opposing end returning to wrap around an adjacent portion of the frame (110) such that the first and opposing ends are tensioned on return to connect to the pair of second couplers (129) that are adjacent to each of the first couplers (129), wherein each second couplers (129) supports to substantially the end of two adjacent elastic cords in tension, whereby each adjacent elastic cord (130) is in turned wrapped around a first coupler (129) that is located on opposite sides of the second coupler (129).

5. A rebounding surface according to claim 3, wherein each of the first and opposing ends of the cord like elastic members (130) returns to connect to the same coupler (129) engaged by the central portion thereof.

6. A rebounding surface according to claim 3, wherein each coupler (129) has at least one aperture (290) for receiving and grasping a bulbous protrusion (131) located proximal to the first and opposing ends of a cord like elastic member (130).

7. A rebounding surface according to claim 3, wherein the coupler (129) has at least a first central portion that provides a curved path for engaging the central portion of the looped cordlike elastic member (130) and at least one aperture (290) for receiving and grasping a bulbous protrusion (131) located proximal to the first and opposing ends of a cord like elastic member (130).

8. A rebounding surface according to claim 7, wherein the coupler (129) has a single aperture (290) that is disposed below the central portion thereof and the first and opposing ends of each cord like elastic member (130) engage the single apertures (290) of the couplers (129) that are immediately adjacent and on opposing side of the coupler (129) that engages the central looped portion thereof.

9. A rebounding surface according to claim 3, wherein at least one coupler (129) has a flat open channel formed by at least two arms on the opposite side of the portion for receiving the elastic cord (130) and a looped strap that removable disengage the channel connecting it to the periphery of the rebounding mat (120).

10. A rebounding surface according to claim 3, wherein at least one coupler (129) has a V-shaped indentation (1298) for engaging a triangular ring (200) that is attached to the periphery of the rebounding mat (120) by a looped strap.

11. A rebounding surface according to claim 1, wherein at least one coupler (129) has a first portion that is a cylindrical bore (2220) that extends radially from the periphery of the rebounding mat (120) and the primary cylindrical axis (2221) of said bore (2220) is oriented tangentially to the periphery of the rebounding mat (120), where the cord like elastic member (130) alternatively passes through the bore (2220) and wraps around the frame (110) in a serpentine path, wherein at least one of the first and opposing end of the cord like elastic member (130) is connectable to at least one of the frame (110) and rebounding mat (120) at two alternative locations to vary the tension thereon.

12. A rebounding surface according to claim 1, wherein:
i) the central portion (121) of the rebounding mat (120) is defined by a series of couplers (129) that are tangentially spaced apart with respect to the geometric center of the central portion (121), and
ii) the rebounding mat (120) having an outer portion (125), having an inner perimeter and an outer perimeter, being connected to the central portion (121) at the inner periphery and extending over the couplers (129) thereof,
the plurality of elastic member (130) connecting the gripping members (123) to the closed frame (110) so as to suspend the central portion (121) of the rebounding mat (120) in tension within the common plane of the closed frame (110) when each elastic member (130) is extended beyond the unstressed length thereof,
the outer portion (125) of the rebounding mat (120) at least partially covers the plurality of elastic members (130) and the outer perimeter thereof is unrestrained.

13. A rebounding surface according to claim 1, wherein the coupler (129) for coupling the elastic cord like member (130) is in tension between the rebounding mat (120) and the closed frame (110), wherein the coupler (129) comprises:
a) a first portion having a curved path for seating and retaining the cord like elastic member (130),
b) a second portion coupled to the first portion having means to grasp opposing ends of the cord like elastic member (130).

14. A rebounding surface according to claim 13, wherein the second portion of the coupler (129) has at least two apertures (290, 290') to mating engage the cord like member (130) having the protrusion (131) extending beyond dominant transverse profile thereof.

15. A method of extending the life of elastic cords used in a trampoline, the method comprising the steps of:
a) providing a closed and horizontally extending frame (110),
b) providing a rebounding mat (120) having at least a central portion (121) defined by a series of couplers (129) that are tangentially spaced apart with respect to the geometric center of the central portion (121),
c) providing a plurality of elastic members (130) having a first end an opposing end and connecting the couplers (129) to said closed frame (110) so as to suspend the central portion (121) of the rebounding mat (120) in tension within the common plane of the closed frame (110) when each elastic member (130) is extended beyond the unstressed length thereof,
d) extending at least some of the elastic members (130) in said plurality to suspend the rebounding mat (120) in tension substantially in the plane of the horizontally extending frame (110), wherein the elastic members (130) are extended to a first length to provide a first level of tension,
e) impacting the rebounding mat (120) repeatedly until the tension decreases appreciably below the first level thereof,
f) extending at least some of the elastic members (130) in said plurality to suspend the rebounding mat (120) in tension substantially in the plane of the horizontally extending frame (110), wherein the elastic members (130) to be extended are disconnected from the corresponding couplers (129), extended to a second length greater than said first length and reconnected to the same corresponding couplers (129) at at least one alternative position while extended to a greater length to provide an adjustment of an active section of the cordlike flexible elastic members (130) between the first and the opposing ends to provide a second level of tension level substantially equal to said first level of tension.

## Patentansprüche

1. Rückfederfläche für ein Trampolin oder eine Rückfedervorrichtung, mit:
a) einem geschlossenen Rahmen (110), der horizontal angeordnet ist,
b) einer Rückfedermatte (120), von der zumindest ein zentraler Abschnitt (121) innerhalb des geschlossenen Rahmens (110) elastisch aufgehängt ist,
c) einer Mehrzahl an seilförmigen flexiblen elastischen Elementen (130), von denen jedes ein erstes Ende und ein gegenüberliegendes Ende zum Koppeln des zentralen Abschnittes (121) der Rückfedermatte (120) in elastischer Aufhängung an den Rahmen (110) aufweist,
d) einer Mehrzahl an Kopplern (129), die am Umfangsrand des zentralen Abschnitts (121) der Rückfedermatte (120) befestigt sind, wobei jeder Koppler (129) dazu ausgebildet ist, ein seilförmiges flexibles elastisches Element (130) an die Rückfedermatte (120) zu koppeln,
e) wobei zumindest eines der Mehrzahl an seilförmigen flexiblen elastischen Elementen (130) und zumindest einer der Mehrzahl an Kopplern (129) dazu ausgebildet ist, das seilförmige flexible elastische Element (130) an denselben Koppler (129) an zumindest zwei alternativen Positionen zu befestigen, um eine Einstellung eines aktiven Abschnitts des seilförmigen flexiblen elastischen Elements (130) zwischen dem ersten Ende und dem gegenüberliegenden Ende bereitzustellen, um der Rückfedermatte (120) zumindest zwei alternative Spannungsgrade zu verleihen.

2. Rückfederfläche nach Anspruch 1, wobei das zumindest eine seilförmige elastische Element (130) mit der Rückfedermatte (120) und dem Rahmen (110) in einem Serpentinenpfad verbunden ist, der Segmente aufweist, die alternativ gegenüberliegende Seiten jedes Kopplers (129) mit alternativen Positionen entlang des Umfangsrand des Rahmens (110) verbinden.

3. Rückfederfläche nach Anspruch 1, weiterhin mit einer Mehrzahl an seilförmigen elastischen Elementen (130), wobei zumindest manche der Mehrzahl an seilförmigen elastischen Elementen (130) an ihrem zentralen Abschnitt umgelenkt sind, wobei der umgelenkte zentrale Abschnitt desselben um den Koppler (129) geschlungen ist, und jeder der beiden Abschnitte desselben zwischen dem zentralen Abschnitt und dem ersten und gegenüberliegenden Ende zurückläuft, um sich um einen benachbarten Abschnitt des Rahmens (110) zu schlingen, so dass die ersten und gegenüberliegenden Enden beim Zurücklaufen gespannt sind, um sich mit der Peripherie der Rückfedermatte (120) zu verbinden, um dieser Spannung zu verleihen.

4. Rückfederfläche nach Anspruch 1, mit:
a) einer Mehrzahl an ersten Kopplern (129);
b) einer Mehrzahl an zweiten Kopplern (129), wobei jeder der ersten und zweiten Koppler (129) ihrer jeweiligen Mehrzahlen an dem Umfangsrand des zentralen Abschnitts (121) der Rückfedermatte (120) befestigt sind, und jeder der ersten Koppler (129) sich zwischen benachbarten zweiten Kopplern (129) befindet,
wobei die Mehrzahl an seilförmigen elastischen Elementen (130) am zentralen Abschnitt derselben umgelenkt sind, wobei der umgelenkte zentrale Abschnitt desselben um den ersten Koppler (129) geschlungen ist und jeder der zwei Abschnitte desselben zwischen dem zentralen Abschnitt und dem ersten und dem gegenüberliegenden Ende zurückläuft, um sich um einen benachbarten Abschnitt des Rahmens (110) zu schlingen, so dass die ersten und gegenüberliegenden Enden beim Rücklaufen gespannt werden, um sich mit dem Paar zweiter Koppler (129), die jedem der ersten Koppler (129) benachbart sind, zu verbinden, wobei jeder zweite Koppler (129) das Ende zweier benachbarter elastischer Seile im Wesentlichen unter Spannung hält, wodurch jedes benachbarte elastische Seil (130) wiederum um einen ersten Koppler (129) geschlungen ist, der an gegenüberliegenden Seiten des zweiten Kopplers (129) angeordnet ist.

5. Rückfederfläche nach Anspruch 3, wobei jedes der ersten und gegenüberliegenden Enden der seilförmigen elastischen Elemente (130) zurückläuft, um mit demselben Koppler (129) verbunden zu sein, der von dem zentralen Abschnitt desselben in Eingriff genommen wird.

6. Rückfederfläche nach Anspruch 3, wobei jeder Koppler (129) zumindest eine Öffnung (290) zum Aufnehmen und Greifen eines knollenförmigen Vorsprungs (131) aufweist, der proximal von dem ersten und gegenüberliegenden Ende eines seilförmigen elastischen Elements (130) angeordnet ist.

7. Rückfederfläche nach Anspruch 3, wobei der Koppler (129) zumindest einen ersten zentralen Abschnitt, der einen gekrümmten Pfad zum Eingreifen des zentralen Abschnitts des geschlauften seilförmigen elastischen Elements (130) bereitstellt, und zumindest eine Öffnung (290) zum Aufnehmen und Greifen eines knollenförmigen Vorsprungs (131) aufweist, der proximal von dem ersten und gegenüberliegenden Ende eines seilförmigen elastischen Elements (130) angeordnet ist.

8. Rückfederfläche nach Anspruch 7, wobei der Koppler (129) eine einzelne Öffnung (290) aufweist, die unter dem zentralen Abschnitt desselben angeordnet ist, und die ersten und gegenüberliegenden Enden jedes seilförmigen elastischen Elements (130) die einzelnen Öffnungen (290) der Koppler (129) in Eingriff nehmen, die dem Koppler (129) an gegenüberliegenden Seiten unmittelbar benachbart sind, der den zentralen geschlauften Abschnitt desselben in Eingriff nimmt.

9. Rückfederfläche nach Anspruch 3, wobei zumindest ein Koppler (129) einen flachen offenen Kanal aufweist, der durch zwei Arme an den gegenüberliegenden Seiten des Abschnitts zum Aufnehmen des elastischen Seils (130) und einer Schlaufe gebildet ist, die in den Kanal abnehmbar eingreifen, der sie mit der Peripherie der Rückfedermatte (120) verbindet.

10. Rückfederfläche nach Anspruch 3, wobei zumindest ein Koppler (129) eine V-förmige Vertiefung (1298) zum Eingreifen eines dreieckigen Rings (200) aufweist, der an dem Umfangsrand der Rückfedermatte (120) durch eine Schlaufe befestigt ist.

11. Rückfederfläche nach Anspruch 1, wobei zumindest ein Koppler (129) einen ersten Abschnitt aufweist, der eine zylindrische Bohrung (2220) ist, die sich radial von der Peripherie der Rückfedermatte (120) erstreckt, und wobei die zylindrische Hauptachse (2221) der Bohrung (2220) tangential zum Umfang der Rückfedermatte (120) orientiert ist, wobei das seilförmige elastische Element (130) alternativ durch die Bohrung (2220) geht und sich um den Rahmen (110) in einem Serpentinenpfad schlingt, wobei zumindest eines des ersten und gegenüberliegenden Endes des seilförmigen elastischen Elements (130) mit dem Rahmen (110) und/oder der Rückfedermatte (120) an zwei alternativen Orten verbindbar ist, um die Spannung derselben zu variieren.

12. Rückfederfläche nach Anspruch 1, wobei:
i) der zentrale Abschnitt (121) der Rückfedermatte (120) durch eine Reihe von Kopplern (129) definiert ist, die tangential bezüglich dem geometrischen Zentrum des zentralen Abschnitts (121) beabstandet sind, und
ii) die Rückfedermatte (120) einen äußeren Abschnitt (125) aufweist, der einen inneren Umfangsrand und einen äußeren Umfangsrand aufweist, und der mit dem zentralen Abschnitt (121) an der inneren Peripherie verbunden ist und sich über die Koppler (129) desselben erstreckt,
wobei die Mehrzahl an elastischen Elementen (130), die die Greifelemente (123) mit dem geschlossenen Rahmen (110) verbinden, um so den zentralen Abschnitt (121) der Rückfedermatte (120) unter Spannung in der gemeinsamen Ebene des geschlossenen Rahmens (110) aufzuhängen, wenn jedes elastische Element (130) über die unbelastete Länge desselben hinaus gedehnt wird,
wobei der äußere Abschnitt (125) der Rückfedermatte (120) zumindest teilweise die Mehrzahl an elastischen Elementen (130) bedeckt, und der äußere Umfangsrand derselben frei ist.

13. Rückfederfläche nach Anspruch 1, wobei der Koppler (129) zum Koppeln des elastischen seilförmigen Elements (130) zwischen der Rückfedermatte (120) und dem geschlossenen Rahmen (110) unter Spannung steht, wobei der Koppler (129) aufweist:
a) einen ersten Abschnitt, der einen gekrümmten Pfad zum Aufnehmen und Zurückhalten des seilförmigen elastischen Elements (130),
b) einen zweiten Abschnitt, der mit dem ersten Abschnitt gekoppelt ist, der Mittel zum Greifen gegenüberliegender Enden des seilförmigen elastischen Elements (130) aufweist.

14. Rückfederfläche nach Anspruch 13, wobei der zweite Abschnitt des Kopplers (129) zumindest zwei Öffnungen (290, 290') aufweist, um von dem seilförmigen Element (130), das den Vorsprung (131) aufweist, in Eingriff genommen zu werden, der sich über das herrschende Querschnittsprofil desselben hinaus erstreckt.

15. Verfahren zum Verlängern der Lebensdauer von elastischen Seilen in einem Trampolin, wobei das Verfahren die Schritte aufweist:
a) Bereitstellen eines geschlossenen und sich horizontal erstreckenden Rahmens (110),
b) Bereitstellen einer Rückfedermatte (120), die zumindest einen zentralen Abschnitt (121) aufweist, der durch eine Reihe von Kopplern (129) definiert ist, die bezüglich des geometrischen Zentrums des zentralen Abschnitts (121) tangential beabstandet sind,
c) Bereitstellen einer Mehrzahl an elastischen Elementen (130), die ein erstes und ein gegenüberliegendes Ende aufweisen und die Koppler (129) mit dem geschlossenen Rahmen (110) verbinden, um so den zentralen Abschnitt (121) der Rückfedermatte (120) in der gemeinsamen Ebene des geschlossenen Rahmens (110) unter Spannung aufzuhängen, wenn jedes elastische Element (130) über die unbelastete Länge desselben verlängert wird,
d) Verlängern zumindest mancher der elastischen Elemente (130) in der Mehrzahl, um die Rückfedermatte (120) im Wesentlichen in der Ebene des sich horizontal erstreckenden Rahmens (110) unter Spannung aufzuhängen, wobei die elastischen Elemente (130) auf eine erste Länge verlängert werden, um ein erstes Spannungsniveau bereitzustellen,
e) wiederholtes Druckausüben auf die Rückfedermatte (120), bis die Spannung spürbar unter das erste Niveau derselben abnimmt,
f) Dehnen zumindest mancher der elastischen Elemente (130) in der Mehrzahl, um die Rückfedermatte (120) im Wesentlichen in der Ebene des sich horizontal erstreckenden Rahmens (110) unter Spannung aufzuhängen, wobei die zu dehnenden elastischen Elemente (130) von den entsprechenden Kopplern (129) abgenommen werden, auf eine zweite Länge gedehnt werden, die größer ist als die erste Länge, und mit denselben entsprechenden Kopplern (129) an zumindest einer alternativen Position wieder verbunden werden, während sie auf eine größere Länge gedehnt sind, um eine Einstellung eines aktiven Abschnitts der seilförmigen flexiblen elastischen Elemente (130) zwischen den ersten und den gegenüberliegenden Enden bereitzustellen, um ein zweites Spannungsniveau bereitzustellen, das im Wesentlichen gleich dem ersten Spannungsniveau ist.

## Revendications

1. Surface de rebond pour un trampoline ou un rebondisseur comprenant :
a) un cadre fermé (110) qui est disposé horizontalement,
b) un tapis de rebond (120) ayant au moins une partie centrale (121) de celui-ci suspendue de manière élastique à l'intérieur du cadre fermé (110),
c) une pluralité d'éléments élastiques flexibles en forme de cordons (130), ayant chacun une première extrémité et une extrémité opposée pour coupler la partie centrale (121) du tapis de rebond (120) en suspension élastique au cadre (110),
d) une pluralité d'éléments d'accouplement (129) fixés au périmètre de la partie centrale (121) du tapis de rebond (120), chaque élément d'accouplement (129) étant configuré pour coupler un élément élastique flexible en forme de cordon (130) au tapis de rebond (120),
e) où au moins l'un de la pluralité d'éléments élastiques flexibles en forme de cordons (130) et au moins l'un de la pluralité d'éléments d'accouplement (129) sont configurés pour fixer l'élément élastique flexible en forme de cordon (130) au même élément d'accouplement (129) à au moins deux positions alternées pour fournir un réglage d'une section active de l'élément élastique flexible en forme de cordon (130) entre la première extrémité et l'extrémité opposée pour fournir au moins deux niveaux alternés de tension au tapis de rebond (120).

2. Surface de rebond selon la revendication 1, dans laquelle l'au moins un élément élastique en forme de cordon (130) est relié au tapis de rebond (120) et au cadre (110) selon un trajet en serpentin ayant un segment qui relie de façon alternée des côtés opposés de chaque élément d'accouplement (129) à des positions alternées le long du périmètre du cadre (110).

3. Surface de rebond selon la revendication 1, comprenant en outre une pluralité d'éléments élastiques en forme de cordons (130), dans laquelle au moins certains de la pluralité d'éléments élastiques en forme de cordons (130) sont pliés au niveau de la partie centrale de ceux-ci, avec la partie centrale pliée de ceux-ci enroulée autour de l'élément d'accouplement (129) et chacune des deux parties de ceux-ci entre la partie centrale et la première extrémité et l'extrémité opposée revenant pour s'enrouler autour d'une partie adjacente du cadre (110) de sorte que la première extrémité et l'extrémité opposée soient tendues au retour pour se relier au niveau de la périphérie du tapis de rebond (120) pour fournir une tension à celui-ci.

4. Surface de rebond selon la revendication 1, comprenant :
a) une pluralité de premiers éléments d'accouplement (129) ;
b) une pluralité de deuxièmes éléments d'accouplement (129), où chacun des premier et deuxième éléments d'accouplement (129) de leurs pluralités respectives est fixé au périmètre de la partie centrale (121) du tapis de rebond (120), et chacun des premiers éléments d'accouplement (129) est situé entre des deuxièmes éléments d'accouplement (129) adjacents,
dans laquelle la pluralité d'éléments élastiques en forme de cordons (130) sont pliés au niveau de la partie centrale de ceux-ci, avec la partie centrale pliée de ceux-ci enroulée autour du premier élément d'accouplement (129) et chacune des deux parties de ceux-ci entre la partie centrale et la première extrémité et l'extrémité opposée revenant pour s'enrouler autour d'une partie adjacente du cadre (110) de sorte que la première extrémité et l'extrémité opposée soient tendues au retour pour se relier à la paire de deuxièmes éléments d'accouplement (129) qui sont adjacents à chacun des premiers éléments d'accouplement (129), où, chacun des deuxièmes éléments d'accouplement (129) supporte sensiblement l'extrémité de deux cordons élastiques adjacents en tension, moyennant quoi chaque cordon élastique adjacent (130) est à son tour enroulé autour d'un premier élément d'accouplement (129) qui est situé sur des côtés opposés du deuxième élément d'accouplement (129).

5. Surface de rebond selon la revendication 3, dans laquelle chacune de la première extrémité et de l'extrémité opposée des éléments élastiques en forme de cordons (130) revient pour se relier au même élément d'accouplement (129) engagé par sa partie centrale.

6. Surface de rebond selon la revendication 3, dans laquelle chaque élément d'accouplement (129) a au moins une ouverture (290) pour recevoir et saisir une saillie bombée (131) située près de la première extrémité et de l'extrémité opposée d'un élément élastique en forme de cordon (130).

7. Surface de rebond selon la revendication 3, dans laquelle l'élément d'accouplement (129) a au moins une première partie centrale qui fournit un trajet incurvé pour s'engager avec la partie centrale de l'élément élastique en forme de cordon (130) en boucle et au moins une ouverture (290) pour recevoir et saisir une saillie bombée (131) située près de la première extrémité et de l'extrémité opposée d'un élément élastique en forme de cordon (130).

8. Surface de rebond selon la revendication 7, dans laquelle l'élément d'accouplement (129) a une ouverture unique (290) qui est disposée sous la partie centrale de celui-ci et la première extrémité et l'extrémité opposée de chaque élément élastique en forme de cordon (130) s'engagent avec les ouvertures uniques (290) des éléments d'accouplement (129) qui sont immédiatement adjacents et sur un côté opposé de l'élément d'accouplement (129) qui s'engage avec la partie central en boucle de celui-ci.

9. Surface de rebond selon la revendication 3, dans laquelle au moins un élément d'accouplement (129) a un canal ouvert plat formé par au moins deux bras sur le côté opposé de la partie destinée à recevoir le cordon élastique (130) et une sangle en boucle qui désengage de manière amovible le canal qui la relie à la périphérie du tapis de rebond (120).

10. Surface de rebond selon la revendication 3, dans laquelle au moins un élément d'accouplement (129) a une indentation en frome de V (1298) pour s'engager avec une bague triangulaire (200) qui est fixée à la périphérie du tapis de rebond (120) par une sangle en boucle.

11. Surface de rebond selon la revendication 1, dans laquelle au moins un élément d'accouplement (129) a une première partie qui est un alésage cylindrique (2220) qui s'étend radialement à partir de la périphérie du tapis de rebond (120) et l'axe cylindrique primaire (2221) dudit alésage (2220) est orienté tangentiellement à la périphérie du tapis de rebond (120), où l'élément élastique en forme de cordon (130) passe de façon alternée à travers l'alésage (2220) et s'enroule autour du cadre (110) selon un trajet en serpentin, dans laquelle au moins l'une de la première extrémité et de l'extrémité opposée de l'élément élastique en forme de cordon (130) peut être reliée à au moins l'un du cadre (110) et du tapis de rebond (120) à deux emplacements alternés pour faire varier la tension sur celui-ci.

12. Surface de rebond selon la revendication 1, dans laquelle :
i) la partie centrale (121) du tapis de rebond (120) est définie par une série d'éléments d'accouplement (129) qui sont tangentiellement espacés les uns des autres par rapport au centre géométrique de la partie centrale (121), et
ii) le tapis de rebond (120) ayant une partie externe (125), ayant un périmètre interne et un périmètre externe, qui est reliée à la partie centrale (121) au niveau de la périphérie interne et s'étendant sur les éléments d'accouplement (129) de celui-ci,
la pluralité d'éléments élastiques (130) reliant les éléments de saisie (123) au cadre fermé (110) de manière à suspendre la partie centrale (121) du tapis de rebond (120) en tension à l'intérieur du plan commun du cadre fermé (110) lorsque chaque élément élastique (130) est étendu au-delà de la longueur non contrainte de celui-ci,
la partie externe (125) du tapis de rebond (120) couvre au moins partiellement la pluralité d'éléments élastiques (130) et le périmètre externe de celui-ci n'est pas limité.

13. Surface de rebond selon la revendication 1, dans laquelle l'élément d'accouplement (129) destiné à coupler l'élément élastique en forme de cordon (130) est en tension entre le tapis de rebond (120) et le cadre fermé (110), dans laquelle l'élément d'accouplement (129) comprend :
a) une première partie ayant un trajet incurvé pour placer et retenir l'élément élastique en forme de cordon (130),
b) une deuxième partie couplée à la première partie ayant des moyens pour saisir des extrémités opposées de l'élément élastique en forme de cordon (130).

14. Surface de rebond selon la revendication 13, dans laquelle la deuxième partie de l'élément d'accouplement (129) a au moins deux ouvertures (290, 290') pour s'engager de manière complémentaire avec l'élément en forme de cordon (130) ayant la saillie (131) s'étendant au-delà du profil transversal dominant de celui-ci.

15. Procédé pour prolonger la durée de vie de cordons élastiques utilisés dans un trampoline, le procédé comprenant les étapes consistant à :
a) fournir un cadre (110) fermé et s'étendant horizontalement,
b) fournir un tapis de rebond (120) ayant au moins une partie centrale (121) définie par une série d'éléments d'accouplement (129) qui sont tangentiellement espacés les uns des autres par rapport au centre géométrique de la partie centrale (121),
c) fournir une pluralité d'éléments élastiques (130) ayant une première extrémité et une extrémité opposée et reliant les éléments d'accouplement (129) audit cadre fermé (110) de manière à suspendre la partie centrale (121) du tapis de rebond (120) en tension à l'intérieur du plan commun du cadre fermé (110) lorsque chaque élément élastique (130) est étendu au-delà de sa longueur non contrainte,
d) étendre au moins certains des éléments élastiques (130) dans ladite pluralité pour suspendre le tapis de rebond (120) en tension sensiblement dans le plan du cadre (110) s'étendant horizontalement, où les éléments élastiques (130) sont étendus à une première longueur pour fournir un premier niveau de tension,
e) percuter le tapis de rebond (120) de manière répétée jusqu'à ce que la tension descende notablement en dessous de son premier niveau,
f) étendre au moins certains des éléments élastiques (130) dans ladite pluralité pour suspendre le tapis de rebond (120) en tension sensiblement dans le plan du cadre (110) s'étendant horizontalement, où les éléments élastiques (130) à étendre sont détachés des éléments d'accouplement (129) correspondants, étendus à une deuxième longueur supérieure à ladite première longueur et reliés de nouveau aux mêmes éléments d'accouplement (129) correspondants à au moins une position alternative tandis qu'ils sont étendus à une longueur plus importante pour fournir un réglage d'une section active des éléments élastiques flexibles en forme de cordons (130) entre la première extrémité et l'extrémité opposée pour fournir un deuxième niveau de tension sensiblement égal audit premier niveau de tension.
